(19) Europäisches Patentamt
European Patent Office
Office européen des brevets

(11) EP 2 647 669 A1

(12) **EUROPÄISCHE PATENTANMELDUNG**

(43) Veröffentlichungstag:
**09.10.2013 Patentblatt 2013/41**

(51) Int Cl.:
***C08L 69/00*** *(2006.01)*

(21) Anmeldenummer: **12163441.4**

(22) Anmeldetag: **05.04.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG**
**51373 Leverkusen (DE)**

(72) Erfinder: **Die Erfindernennung liegt noch nicht vor**

(54) **Schlagzähmodifizierte Polycarbonat-Zusammensetzungen zur vereinfachten Herstellung von tieftemperaturzähen Bauteilen mit hochglänzenden und matten Bauteilabschnitten**

(57) Die vorliegende Erfindung betrifft schlagzähmodifizierte Polycarbonat-Formmassen, deren Verwendung zur Herstellung von Formkörpern und Formteilen sowie daraus hergestellte Formkörper und Formteile enthaltend Mischungen aus im Emulsionspolymerisationsverfahren und im Masse-, Lösungs- oder Suspensionspolymerisationsverfahren hergestellten Pfropfpolymerisaten mit definierter Pfropfpartikelgrößenverteilung, welche sich einerseits über ein breites Verarbeitungsfenster (d.h. auch bei hohen Verarbeitungstemperaturen) zur Herstellung unlackierter Bauteile mit Hochglanzoberfläche eignen und andererseits feingenarbte bzw. oberflächengeätzte Werkzeugoberflächen präzise abzubilden vermögen, wodurch sich in einem Werkzeug mit unterschiedlichen Oberflächentexturen in einem singulären Spritzgussschritt ohne weitere Oberflächennachbehandlung Bauteile mit sowohl hochglänzenden als auch tiefmatten Bauteilabschnitten realisieren lassen. Die Formmassen weisen eine hohe Wärmeformbeständigkeit und Tieftemperaturduktilität sowie - im Hinblick auf nicht-lackierte Bauteile besonders wichtig - exzellente Spannungsrißbeständigkeit unter Medieneinfluss auf

EP 2 647 669 A1

## Beschreibung

Die vorliegende Erfindung betrifft schlagzähmodifizierte Polycarbonat-Formmassen enthaltend Mischungen aus im Emulsionspolymerisationsverfahren und im Masse-, Lösungs- oder Suspensionspolymerisationsverfahren hergestellten Pfropfpolymerisaten mit definierter Pfropfpartikelgrößenverteilung, welche sich einerseits über ein breites Verarbeitungsfenster (d.h. auch bei hohen Verarbeitungstemperaturen) zur Herstellung unlackierter Bauteile mit Hochglanzoberfläche eignen und andererseits feingenarbte bzw. oberflächengeätzte Werkzeugoberflächen präzise abzubilden vermögen. Hierdurch lassen sich in einem Werkzeug mit unterschiedlichen Oberflächentexturen in einem singulären Spritzgussschritt ohne weitere Oberflächennachbehandlung Bauteile mit sowohl hochglänzenden als auch tiefmatten Bauteilabschnitten realisieren. Die Formmassen weisen eine hohe Wärmeformbeständigkeit und Tieftemperaturduktilität sowie eine für nicht-lackierte Bauteile besonders wichtige, exzellente Spannungsrißbeständigkeit unter Chemikalieneinfluss auf

Die vorliegende Erfindung betrifft auch die Verwendung der erfindungsgemäßen Polycarbonat-Formmassen zur Herstellung von Formkörpern oder Formteilen, welche ohne weitere Oberflächennachbehandlungsschritte in einem singulären Fertigungsschritt im Spritzgussverfahren hergestellt werden und welche sowohl hochglänzende als auch tiefmatte Bauteilabschnitte aufweisen.

Die vorliegende Erfindung betrifft darüber hinaus auch Formkörper oder Formteile aus den erfindungsgemäßen Zusammensetzungen, welche **ohne weitere Oberflächennachbehandlungsschritte in einem singulären Fertigungsschritt** im Spritzgussverfahren hergestellt werden und welche sowohl hochglänzende als auch tiefmatte Bauteilabschnitte aufweisen.

Schlagzähmodifizierte Polycarbonat-Zusammensetzungen enthaltend Mischungen von Pfropfpolymeren mit definierter Teilchengröße sind literaturbekannt.

EP 1 141 123 B1 offenbart hochschlagzähe thermoplastische Formmassen enthaltend ein im Emulsionspolymerisationsverfahren hergestelltes Pfropfpolymerisat mit trimodaler Kautschukpartikelgrößenverteilung, ein im Lösungs-, Masse- oder Suspensionspolymerisationsverfahren hergestelltes Pfropfpolymersiat und ein kautschukfreies Copolymerisat aus Styrol und Acrylnitril, welche optional ein weiteres Harz, darunter auch aromatisches Polycarbonat oder Polyestercarbonat enthalten können.

EP 488 930 B1 offenbart ABS-Formmassen mit hoher Zähigkeit, genügend hoher Wärmeformbeständigkeit, ausgezeichneter thermoplastischer Verarbeitbarkeit und gezielt einstellbarem geringen Oberflächenglanz enthaltend eine Mischung aus drei thermoplastischen Co- oder Terpolymerisaten unterschiedlichen Molekulargewichtes, ein Pfropfpolymerisat mit einem mittleren Teilchendurchmesser (D50) von 50 bis 500 nm, welches vorzugsweise durch Emulsionspolymerisation hergestellt wurde, ein weiteres Pfropfpolymerisat mit einem mittleren Teilchendurchmesser (D50) von 1000 bis 5000 nm, welches vorzugsweise durch Lösungs- oder Massepolymerisation hergestellt wurde, sowie aromatisches Polycarbonat.

WO 99/65991 A1 beschreibt zur Galvanisierung geeignete Zusammensetzungen enthaltend Polycarbonat, Styrolcopolymer, ein erstes Pfropfpolymersiat, bevorzugt hergestellt in Emulsionspolymerisation, basierend auf einer Kautschukgrundlage mit einem mittleren Partikeldurchmesser (D50) von 50 bis 500 nm sowie ein zweites Pfropfpolymerisat, bevorzugt hergestellt in Masse-, Lösungs- oder Suspensionspolymerisation, basierend auf einer Kautschukgrundlage mit einem mittleren Partikeldurchmesser (D50) von 600 bis 20000 nm.

US 4,677,162 offenbart tieftemperaturzähe Formmassen mit niedrigem Glanzgrad enthaltend Polycarbonat, Masse-ABS mit einer mittleren Kautschukpartikelgröße von größer als 750 nm und ein schlagzähmodifizierendes Pfropfpolymer mit einer mittleren Kautschukpartikelgröße von unter 750 nm.

DE 40 14 419 A1 offenbart thermoplastische Formmassen mit gutem Fließverhalten, guter Tieftemperaturzähigkeit und hoher Thermostabilität enthaltend Polycarbonat, ein im Masse-, Lösungs- oder Suspensionsverfahren hergestelltes erstes Pfropfpolymersiat mit einem mittleren Teilchendurchmesser der gepfropften Kautschukteilchen von 500 bis 5000 nm sowie ein im Emulsionspolymerisationsverfahren hergestelltes zweites Pfropfpolymerisat mit einer Pfropfgrundlage mit einem durchschnittlichen Teilchendurchmesser (D50) von 50 bis 2000 nm. EP 312 929 A2 beschreibt thermoplastische Formmassen mit guter Zähigkeit, Fließfähigkeit, hohem Glanz und guter Witterungsbeständigkeit enthaltend Polycarbonat und eine Mischung aus zwei Pfropfpolymerisaten, wobei das erste Pfropfpolymerisat, hergestellt durch Emulsionspolymerisation, auf einer elastomeren Pfropfgrundlage mit einem mittleren Teilchendurchmesser (D50) von 50 bis 500 nm basiert und das zweite Pfropfpolymerisat, hergestellt durch Masse-, Lösungs- oder Suspensionspolymerisation, einen mittleren Teilchendurchmesser von 800 bis 5000 nm besitzt.

EP 1 960 467 A1 offenbart Zusammensetzungen mit exzellenter Tieftemperaturduktilität und verbessertem Verarbeitungsverhalten enthaltend Polycarbonat, zwei Pfropfpolymerisate, optional ein (Co) polymerisat, dadurch gekennzeichnet, dass das gewichtsgemittelte Molekulargewicht des freien (Co) Polymerisats im ersten Pfropfpolymerisat vom gewichtsgemittelten Molekulargewicht der Mischung aus dem freien (Co) Polymerisat im zweiten Pfropfpolymerisat und dem optional separat zugesetzten (Co) Polymerisat um mindestens 32.000 g/mol differieren. In bevorzugter Ausführungsform handelt es sich bei einem der beiden Pfropfpolymerisate, in besonders bevorzugter Ausführungsform bei

beiden Pfropfpolymersiaten um ein Masse-, Lösungs- oder Suspensionspolymerisat.

Die Aufgabe der vorliegenden Erfindung bestand darin, Polycarbonat-Formmassen mit gutem **Verarbeitungsverhalten, hoher Wärmeformbeständigkeit sowie exzellenter Tieftemperaturduktilität und** Spannungsrißbeständigkeit unter Chemikalieneinfluss bereitzustellen, welche über ein breites Temperaturverarbeitungsfenster einerseits mit hochglanzpolierten Werkzeugen hochglänzende Oberflächen liefern und andererseits feingenarbte bzw. oberflächengeätzte Werkzeugoberflächen präzise abzubilden vermögen.

Die im Stand der Technik beschriebenen Zusammensetzungen erfüllen diese Aufgabe nur unzufriedenstellend.

Überraschenderweise wurde nun gefunden, dass schlagzähmodifizierte Polymerzusammensetzungen diese Aufgabenstellung erfüllen, enthaltend

A) 45 bis 95 Gew.-Teile, bevorzugt 50 bis 80 Gew.-Teile, insbesondere 55 bis 75 Gew.-Teile, bezogen auf die Summe aus A und B, wobei sich die Gewichtsteile aus A und B zu 100 addieren, aromatisches Polycarbonat und/ oder Polyestercarbonat mit einem gewichtsgemitteltem Molekulargewicht (gemessen durch Gelpermeationschromatographie (GPC) in Methylenchlorid bei 25°C unter Verwendung von Polycarbonat-Standard) von bevorzugt 23.000 bis 35.000 g/mol, besonders bevorzugt 24.000 bis 33.000 g/mol, ganz besonders bevorzugt 26.000 bis 31.000 g/mol,

B) 5 bis 55 Gew.-Teile, bevorzugt 20 bis 50 Gew.-Teile, insbesondere 25 bis 45 Gew.-Teile, bezogen auf die Summe aus A und B, einer Mischung enthaltend

B1) mindestens ein im Emulsionspolymersiationsverfahren hergestelltes Pfropfpolymerisat,

B2) mindestens ein im Masse-, Suspensions- oder Lösungspolymeriationsverfahren hergestelltes Pfropfpolymerisat,

B3) optional ein kautschukfreies Vinyl(co)polymerisat und

C) 0 bis 30 Gew.-Teile, bevorzugt 0,1 bis 20 Gew.-Teile, insbesondere 0,3 bis 7 Gew.-Teile, bezogen auf die Summe auf A und B, mindestens eines handelsüblichen Polymeradditivs,

dadurch gekennzeichnet, dass die Zusammensetzung insgesamt weniger als 2,0 Gew.-% Pfropfpartikel aus **den Komponenten B1 und B2 mit einem zugehörigen** Pfropfpartikeldurchmesser über 800 nm enthält, und
insgesamt weniger als 2,0 Gew.-% an Pfropfpartikeln aus den Komponenten B1 und B2 mit einem zugehörigen Pfropfpartikeldurchmesser unterhalb von 100 nm enthält, und
und dadurch gekennzeichnet, dass das Pfropfpolymerisat gemäß Komponente B1 hergestellt wird durch Pfropfung einer Mischung (B1.1) vinylischer Verbindungen auf eine partikuläre kautschukelastische Pfropfgrundlage (B1.2), wobei diese Pfropfungsreaktion unter Verwendung einer anorganischen Persulfatverbindung als Polymerisationsinitiator gestartet wird, und
wobei die Zusammensetzung bevorzugt frei ist von im Emulsiospolymerisationsverfahren hergestellten Pfropfpolymerisaten, die unter Verwendung von Redox-basierten Polymerisationsinitiatorsystemen hergestellt worden sind.

Die Pfropfpartikelteilchengrößenverteilung und daraus abgeleitete Werte werden, soweit in der vorliegenden Anmeldung nicht explizit anders angegeben, mittels Ultrazentrifugenmessung (W. Scholtan, H. Lange, Kolloid, Z. und Z. Polymere 250 (1972), 782-1796) bestimmt.

Der prozentuale Gewichtsanteil der Pfropfpartikel aus B1 und B2, bezogen auf die Gesamtzusammensetzung, mit einem zugehörigen Pfropfpartikeldurchmesser über 800 nm ($A_{>800nm}$), beziehungsweise unterhalb von 100 nm ($A_{<100nm}$) errechnet sich aus den individuell an den Komponenten B1 und B2 ermittelten Gelgehalten $G_{B1}$ und $G_{B2}$, den für die Komponenten B1 und B2 individuell ermittelten Pfropfpartikelmassenanteilen mit einem zugehörigen Pfropfpartikeldurchmesser über 800 nm ($A_{B1,>800nm}$ und $A_{B2,>800nm}$) beziehungsweise unterhalb von 100 nm ($A_{B1,<100nm}$ und $A_{B2,<100nm}$) sowie den prozentualen Gew.- Anteilen von B1 und B2 in der Gesamtzusammensetzung [B1] und [B2] .

Diese Berechnung erfolgt nach den folgenden Formeln:

$$A_{<100nm} = [B1] \cdot G_{B1} \cdot A_{B1,<100nm} + [B2] \cdot G_{B2} \cdot A_{B2,<100nm}$$

und

$$A_{>800nm} = [B1] \cdot G_{B1} \cdot A_{B1,>800nm} + [B2] \cdot G_{B2} \cdot A_{B2,>800nm}.$$

Alternativ lässt sich der prozentuale Gewichtsanteil der Pfropfpartikel aus B1 und B2, bezogen auf die Summe aus A bis C, mit einem zugehörigen Pfropfpartikeldurchmesser über 800 nm beziehungsweise unterhalb von 100 nm, auch direkt an der compoundierten Zusammensetzung durch Ultrazentrifugation an einer Suspension der Zusammensetzung in einem geeigneten Medium, bevorzugt in Propylencarbonat, ermitteln. Hierzu kann der Polycarbonat- und Polyestercarbonatanteil der Zusammensetzung gegebenenfalls zuvor vollständig hydrolisiert werden.

Das Pfropfpolymerisat B2 wird in den erfindungsgemäßen Zusammensetzungen in einer Konzentration von bevorzugt 2 bis 90 Gew.-Teile, besonders bevorzugt von 5 bis 65 Gew.-Teile, ganz besonders bevorzugt von 10 bis 45 Gew.-Teile, bezogen auf die Summe aus B1 und B2, eingesetzt.

In einer bevorzugten Ausführungsform beträgt in den erfindungsgemäßen Zusammensetzungen die Summe der Anteile der Komponenten B1 und B2, bezogen auf die Komponente B, 35 bis 100 Gew.-Teile, weiter bevorzugt 35 bis 85 Gew.-Teile, besonders bevorzugt 40 bis 80 Gew.-Teile.

In bevorzugter Ausführungsform beträgt in den erfindungsgemäßen Zusammensetzungen der Anteil des kautschukfreien Vinyl(co)polymerisat gemäß Komponente B3, bezogen auf die Komponente B, 0 bis 65 Gew.-Teile, weiter bevorzugt 15 bis 65 Gew.-Teile, besonders bevorzugt 20 bis 60 Gew.-Teile.

In bevorzugter Ausführungsform basieren die Pfropfpolymerisate B1 und B2 beide auf Butadien-haltigen elastomeren Pfropfgrundlagen B 1.2 und B2.2. Der Gesamtgehalt an Butadien aus den Pfropfgrundlagen B1.2 und B2.2, bezogen auf die Gesamtzusammensetzung, beträgt bevorzugt 3 bis 14 Gew.-%, besonders bevorzugt 5 bis 12 Gew.-%, besonders bevorzugt 6 bis 10 Gew.-%.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

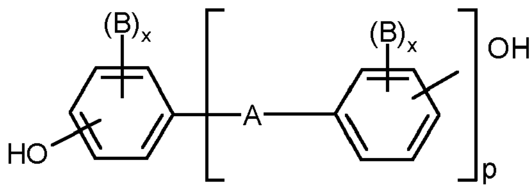

(I),

wobei

A eine Einfachbindung, C1 bis C5-Alkylen, C2 bis C5-Alkyliden, C5 bis C6-Cycloalkyliden, -O-, -SO-, -CO-, -S-, -SO2-, C6 bis C12-Arylen, an das weitere aromatische gegebenenfalls Heteroatome enthaltende Ringe kondensiert sein können,

oder ein Rest der Formel (II) oder (III)

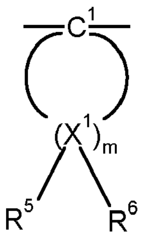

(II)

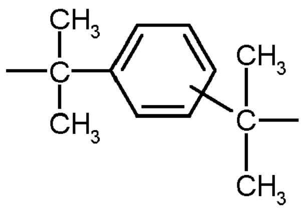

(III)

B jeweils C1 bis C12-Alkyl, vorzugsweise Methyl, Halogen, vorzugsweise Chlor und/oder Brom

x jeweils unabhängig voneinander 0, 1 oder 2,

p 1 oder 0 sind, und

R5 und R6 für jedes X1 individuell wählbar, unabhängig voneinander Wasserstoff oder C1 bis C6-Alkyl, vorzugsweise Wasserstoff, Methyl oder Ethyl,

X1 Kohlenstoff und

m eine ganze Zahl von 4 bis 7, bevorzugt 4 oder 5 bedeuten, mit der Maßgabe, dass an mindestens einem Atom X1, R5 und R6 gleichzeitig Alkyl sind.

Bevorzugte Diphenole sind Hydrochinon, Resorcin, Dihydroxydiphenole, Bis- (hydroxyphenyl)- C1- C5- alkane, Bis- (hydroxyphenyl)- C5- C6- cycloalkane, Bis- (hydroxyphenyl)- ether, Bis- (hydroxyphenyl)- sulfoxide, Bis- (hydroxyphenyl)- ketone, Bis- (hydroxyphenyl)- sulfone und $\alpha$, $\alpha$- Bis- (hydroxyphenyl)- diisopropyl- benzole sowie deren kernbromierte und/ oder kernchlorierte Derivate.

Besonders bevorzugte Diphenole sind 4, 4'- Dihydroxydiphenyl, Bisphenol- A, 2, 4- Bis (4- hydroxyphenyl)- 2-methylbutan, 1, 1- Bis- (4- hydroxyphenyl)- cyclohexan, 1, 1- Bis- (4- hydroxyphenyl)- 3.3.5- trimethylcyclohexan, 4, 4'-Dihydroxydiphenylsulfid, 4, 4'- Dihydroxydiphenylsulfon sowie deren di- und tetrabromierten oder chlorierten Derivate wie beispielsweise 2, 2- Bis (3- Chlor- 4- hydroxyphenyl)- propan, 2, 2- Bis- (3, 5- dichlor- 4- hydroxyphenyl)- propan oder 2, 2- Bis- (3, 5- dibrom- 4- hydroxyphenyl)- propan. Insbesondere bevorzugt ist 2, 2- Bis- (4- hydroxyphenyl)- propan (Bisphenol- A) .

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p- Chlorphenol, p- tert.- Butylphenol oder 2, 4, 6- Tribromphenol, aber auch langkettige Alkylphenole, wie 4- [2- (2, 4, 4- Trimethylpentyl) ]- phenol, 4- (1, 3- Tetramethylbutyl)- phenol gemäß DE- A 2 842 005 oder Monoalkylphenol oder Dialkylphenole mit insgesamt 8 bis 20 Kohlenstoffatomen in den Alkylsubstituenten, wie 3, 5- di- tert.-Butylphenol, p- iso- Octylphenol, p- tert.- Octylphenol, p- Dodecylphenol und 2- (3, 5- Dimethylheptyl)- phenol und 4-(3, 5- Dimethylheptyl)- phenol. Die Menge an einzusetzenden Kettenabbrechern beträgt im allgemeinen zwischen 0, 5 Mol%, und 10 Mol%, bezogen auf die Molsumme der jeweils eingesetzten Diphenole.

Die thermoplastischen, aromatischen Polycarbonate haben bevorzugt mittlere Gewichtsmittelmolekulargewichte (Mw, gemessen durch Gelpermeationschromatographie in Methylenchlorid bei 25°C mit Polycarbonat als Standard) von 23.000 bis 35.000 g/mol, vorzugsweise 24.000 bis 33.000 g/mol, besonders bevorzugt 26.000 bis 31.000 g/mol.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen

Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol- A- Homopolycarbonaten die Copolycarbonate von Bisphenol- A mit bis zu 15 Mol%, bezogen auf die Molsummen an Diphenolen, anderen als bevorzugt oder besonders bevorzugt genannten Diphenolen, insbesondere 2, 2- Bis (3, 5- dibrom- 4- hydroxyphenyl)- propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether- 4, 4'- dicarbonsäure und der Naphthalin- 2, 6- dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C1 bis C22-Alkylgruppen oder durch Halogenatome substituiert sein können, sowie aliphatische C2 bis C22-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichlorid.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3, 3'-, 4, 4'- Benzophenontetracarbonsäuretetrachlorid, 1, 4, 5, 8- Napthalintetracarbon- **säuretetrachloridoder** Pyromellithsäuretetrachlorid, in Mengen von 0, 01 bis 1, 0 Mol% (bezogen auf eingesetzte Dicarbonsäuredichloride) oder drei- oder mehrfunktionelle Phenole, wie Phloroglucin, 4, 6- Dimethyl- 2, 4, 6- tri- (4- hydroxyphenyl)- hept- 2- en, 4, 6- Dimethyl- 2, 4- 6- tri- (4- hydroxyphenyl)- heptan, 1, 3, 5- Tri- (4- hydroxyphenyl)- benzol, 1, 1, 1- Tri- (4- hydroxyphenyl)- ethan, Tri- (4- hydroxyphenyl)- phenylmethan, 2, 2- Bis [4, 4- bis (4- hydroxyphenyl)- cyclohexyl]- propan, 2, 4- Bis (4- hydroxyphenyl- isopropyl)- phenol, Tetra- (4- hydroxyphenyl)- methan, 2, 6- Bis (2- hydroxy- 5- methyl- benzyl)- 4- methyl- phenol, 2- (4- Hydroxyphenyl)- 2- (2, 4- dihydroxyphenyl)- propan, Tetra- (4- [4- hydroxyphenyl- isopropyl]- phenoxy)- methan, 1, 4- Bis [4, 4'- dihydroxytri- phenyl)- methyl]- benzol, in Mengen von 0, 01 bis 1, 0 Mol% bezogen auf eingesetzte Diphenole verwendet werden. Phenolische Verzweigungsmittel können mit den Diphenolen vorgelegt, Säurechlorid- Verzweigungsmittel können zusammen mit den Säuredichloriden eingetragen werden.

**In den thermoplastischen, aromatischen Polyestercarbonaten kann der Anteil an** Carbonatstruktureinheiten beliebig variieren. Vorzugsweise **beträgt der Anteil an** Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen Polycarbonate und Polyestercarbonate können allein oder im beliebigen Gemisch eingesetzt werden.

**Komponente B1**

Bei der Komponente B1 handelt es sich um Pfropfpolymerisate, hergestellt im Emulsionspolymersiationsverfahren, von in bevorzugter Ausführungsform,

B1.1) 5 bis 95 Gew.- %, vorzugsweise 10 bis 70 Gew.- %, besonders bevorzugt 20 bis 60 Gew.- %, bezogen auf die Komponente B1, einer Mischung aus

B1.1.1) 65 bis 85 Gew.- %, bevorzugt 70 bis 80 Gew.- %, bezogen auf B1.1, mindestens eines Monomeren ausgewählt aus der Gruppe der Vinylaromaten (wie beispielsweise Styrol, $\alpha$- Methylstyrol), kernsubstituierten Vinylaromaten (wie beispielsweise p- Methylstyrol, p- Chlorstyrol) und Methacrylsäure- (C1- C8)- Alkylester (wie beispielsweise Methylmethacrylat, Ethylmethacrylat) und

B1.1.2) 15 bis 35 Gew.- %, bevorzugt 20 bis 30 Gew.- %, bezogen auf B1.1, mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat) und Derivate

(wie beispielsweise Anhydride und Imide) ungesättigter Carbonsäuren (beispielsweise Maleinsäureanhydrid und N-Phenyl- Maleinimid)
auf
B1.2) 95 bis 5 Gew.- %, vorzugsweise 90 bis 30 Gew.- %, besonders bevorzugt 80 bis 40 Gew.- %, bezogen auf die Komponente B1, wenigstens einer elastomeren Pfropfgrundlage.

Die Pfropfgrundlage hat bevorzugt eine Glasübergangstemperatur < 0°C, weiter bevorzugt < - 20°C, besonders bevorzugt <-60°C.

Glasübergangstemperaturen werden, soweit in der vorliegenden Erfindung nicht anders angegeben, mittels dynamischer Differenzkalorimetrie (DSC) gemäß der Norm DIN EN 61006 **bei einer Heizrate von 10 K/min mit Definition der Tg als** Mittelpunkttemperatur (Tangentenmethode) und Stickstoff als Schutzgas bestimmt.

Die Pfropfpartikel in der Komponente B1 weisen bevorzugt eine mittlere Teilchengröße (D50-Wert) von 0,1 bis 0,8 $\mu$m, vorzugsweise von 0,15 bis 0,6 $\mu$m, besonders bevorzugt von 0,2 bis 0,5 $\mu$m auf

Die mittlere Teilchengröße D50 ist der Durchmesser, oberhalb und unterhalb dessen jeweils 50 Gew.-% der Teilchen liegen.

In bevorzugter Ausführungsform enthält das Emulsionspfropfpolymerisat gemäß Komponente B1 weniger als 15 Gew.-%, besonders bevorzugt weniger als 10 Gew.-%, ganz besonders bevorzugt weniger als 5 Gew.-%, bezogen auf den Gelanteil des Polymerisats, Pfropfpartikel mit einem Partikeldurchmesser von über 800 nm und in weiter bevorzugter Ausführungsform weniger als 30 Gew.-%, besonders bevorzugt weniger als 20 Gew.-%, insbesondere weniger als 15 Gew.-%, bezogen auf den Gelanteil des Polymerisats, Pfropfpartikel mit einem Durchmesser von unterhalb 100 nm.

Bevorzugte Monomere B1.1.1 sind ausgewählt aus mindestens einem der Monomere Styrol, $\alpha$-Methylstyrol und Methylmethacrylat, bevorzugte Monomere B1.1.2 sind ausgewählt aus mindestens einem der Monomere Acrylnitril, Maleinsäureanhydrid und Methylmethacrylat.

Besonders bevorzugte Monomere sind B1.1.1 Styrol und B1.1.2 Acrylnitril.

Für die Pfropfpolymerisate B1 geeignete Pfropfgrundlagen B1.2 sind beispielsweise Dienkautschuke, Dien-Vinyl- Blockcopolymer- Kautschuke, EP (D) M- Kautschuke, also solche auf Basis Ethylen/ Propylen und gegebenenfalls Dien, Acrylat-, Polyurethan-, Silikon-, Chloropren- und Ethylen/ Vinylacetat- Kautschuke sowie Mischungen aus solchen Kautschuken bzw. Silikon- Acrylat- Kompositkautschuke, in denen die Silikon- und die Acrylatkomponenten chemisch miteinander (z.B. durch Pfropfung) miteinander verknüpft sind.

Bevorzugte Pfropfgrundlagen B1.2 sind Dienkautschuke (z.B. auf Basis von Butadien oder Isopren), Dien-Vinyl- Blockcopolymer- Kautschuke (z.B. auf Basis von Butadien- und Styrolblöcken), Copolymerisate von Dienkautschuken mit weiteren copolymerisierbaren Monomeren (z.B. gemäß B1.1.1 und B1.1.2) und Mischungen aus den zuvor genannten Kautschuktypen. Besonders bevorzugt sind reiner Polybutadienkautschuk und Styrol- Butadien- Blockcopolymerkautschuk.

In besonders bevorzugter Ausführungsform basiert das Emulsionspfropfpolymerisat gemäß Komponente B1 auf einer nicht durch Agglomeration hergestellten Kautschukgrundlage B1.2.

Weiterhin bevorzugt sind die erfindungsgemäßen Polycarbonat-Zusammensetzungen frei von Emulsionspfropfpolymerisaten enthaltend durch Agglomeration hergestellte Kautschukgrundlagen.

Der Gelanteil der Pfropfpolymerisate beträgt mindestens 15 Gew.-%, bevorzugt mindestens 60 Gew.-%, besonders bevorzugt mindestens 75 Gew.-% (gemessen in Aceton).

Der Gelgehalt der Pfropfpolymerisate wird, soweit in der vorliegenden Erfindung nicht anders angegeben, bei 25°C als in Aceton als Lösungsmittel unlöslicher Anteil bestimmt (M. Hoffmann, H. Krömer, R. Kuhn, Polymeranalytik I und II, Georg Thieme-Verlag, Stuttgart 1977).

Die Pfropfpolymerisate B1 werden hergestellt durch radikalische Polymerisation, wobei es essentiell im Sinne der vorliegenden Erfindung ist, dass die radikalische Pfropfungsreaktion unter Verwendung eines Peroxosulfats, wie beispielsweise und bevorzugt Natrium- oder Kaliumperoxodisulfat, als Radikalbildner gestartet wird.

Das Pfropfpolymerisat B1 umfasst herstellungsbedingt im Allgemeinen freies, d.h. nicht chemisch an die Kautschukgrundlage gebundenes Copolymerisat aus B1.1.1 und B1.1.2, das in geeigneten Lösungsmitteln (z.B. Aceton) löslich ist.

Bevorzugt enthält die Komponente B1 ein freies Copolymerisat aus B1.1.1 und B1.1.2, welches ein gewichtsgemitteltes Molekulargewicht (Mw), bestimmt per Gelpermeationschromatographie mit Polystyrol als Standard, von bevorzugt 30000 bis 150000 g/mol, besonders bevorzugt von 40000 bis 120000 g/mol aufweist.

## Komponente B2

Bei der Komponente B2 handelt es sich um Pfropfpolymerisate, hergestellt im Masse-, Lösungs- oder Suspensionspolymerisationsverfahren, von in bevorzugter Ausführungsform
B2.1) 5 bis 95 Gew.- %, vorzugsweise 80 bis 93 Gew.- %, besonders bevorzugt 85 bis 92 Gew.- %, ganz besonders bevorzugt 87 bis 93 Gew.- %, bezogen auf die Komponente B2, einer Mischung aus

B2.1.1) 65 bis 85 Gew.- %, bevorzugt 70 bis 80 Gew.- %, bezogen auf die Mischung B. 2.1, mindestens eines Monomeren ausgewählt aus der Gruppe der Vinylaromaten (wie beispielsweise Styrol, α- Methylstyrol), kernsubstituierten Vinylaromaten (wie beispielsweise p- Methylstyrol, p- Chlorstyrol) und Methacrylsäure- (C1- C8)- Alkylester (wie beispielsweise Methylmethacrylat, Ethylmethacrylat) und

B2.1.2) 15 bis 35 Gew.- %, bevorzugt 20 bis 30 Gew.- % bezogen auf die Mischung B2.1, mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat) und Derivate (wie beispielsweise Anhydride und Imide) ungesättigter Carbonsäuren (beispielsweise Maleinsäureanhydrid und N- Phenyl- Maleinimid)

auf

B2.2) 95 bis 5 Gew.- %, vorzugsweise 20 bis 7 Gew.- %, besonders bevorzugt 15 bis 8 Gew.- %, ganz besonders bevorzugt 13 bis 7 Gew.- %, bezogen auf die Komponente B2, wenigstens einer Pfropfgrundlage.

Die Pfropfgrundlage hat vorzugsweise eine Glasübergangstemperatur < 0°C, bevorzugt < -20°C, besonders bevorzugt < -60°C.

Die Pfropfpartikel in der Komponente B2 weisen bevorzugt eine mittlere Teilchengröße (D50-Wert) von 0,1 bis 0,75 μm, vorzugsweise von 0,2 bis 0,7 μm, besonders bevorzugt von 0,3 bis 0,6 μm auf

In bevorzugter Ausführungsform enthält das Pfropfpolymerisat gemäß Komponente B2 weniger als 40 Gew.-%, besonders bevorzugt weniger als 30 Gew.-%, insbesondere weniger als 20 Gew.-%, **bezogen auf den Gelanteil des Pfropfpolymersiat, Pfropfpartikel mit einem** Partikeldurchmesser von über 800 nm und in besonders bevorzugter Ausführungsform weniger als 10 Gew.-%, ganz besonders bevorzugt weniger als 2 Gew.-%, bezogen auf den Gelanteil des Pfropfpolymerisats, Pfropfpartikel mit einem Partikeldurchmesser von unterhalb 100 nm.

Bevorzugte Monomere B2.1.1 sind ausgewählt aus mindestens einem der Monomere Styrol, α-Methylstyrol und Methylmethacrylat, bevorzugte Monomere B2.1.2 sind ausgewählt aus mindestens einem der Monomere Acrylnitril, Maleinsäureanhydrid und Methylmethacrylat.

Besonders bevorzugte Monomere sind B2.1.1 Styrol und B2.1.2 Acrylnitril.

Für die Pfropfpolymerisate B2 geeignete Pfropfgrundlagen B2.2 sind beispielsweise Dienkautschuke, Dien-Vinyl- Blockcopolymer- Kautschuke, EP (D) M- Kautschuke, also solche auf Basis Ethylen/ Propylen und gegebenenfalls Dien, Acrylat-, Polyurethan-, Silikon-, Chloropren- und Ethylen/ Vinylacetat- Kautschuke sowie Mischungen aus solchen Kautschuken bzw. Silikon- Acrylat- Kompositkautschuke, in denen die Silikon- und die Acrylatkomponenten chemisch miteinander (z.B. durch Pfropfung) miteinander verknüpft sind.

Bevorzugte Pfropfgrundlagen B2.2 sind Dienkautschuke (z.B. auf Basis von Butadien oder Isopren), Dien-Vinyl- Blockcopolymer- Kautschuke (z.B. auf Basis von Butadien- und Styrolblöcken), Copolymerisate von Dienkautschuken mit weiteren copolymerisierbaren Monomeren (z.B. gemäß B2.1.1 und B2.1.2) und Mischungen aus den zuvor genannten Kautschuktypen. Besonders bevorzugt als Pfropfgrundlage B2.2 sind Styrol- Butadien- Blockcopolymerkautschuke und Mischungen von Styrol- Butadien- Blockcopolymerkautschuken mit reinem Polybutadienkautschuk.

Der Gelanteil der Pfropfpolymerisate B2 beträgt vorzugsweise 10 bis 35 Gew.-%, besonders bevorzugt 15 bis 30 Gew.-%, ganz besonders bevorzugt 17 bis 23 Gew.-% (gemessen in Aceton).

Besonders bevorzugte Polymerisate B2 sind z.B. ABS-Polymerisate hergestellt durch radikalische Polymerisation, welche in bevorzugter Ausführungsform bis zu 10 Gew.-%, besonders bevorzugt bis zu 5 Gew.-%, besonders bevorzugt 2 bis 5 Gew.-%, jeweils bezogen auf das Pfropfpolymerisat B2, an n-Butylacrylat enthalten.

Das Pfropfpolymerisat B2 umfasst im Allgemeinen herstellungsbedingt freies, d.h. nicht chemisch an die Kautschukgrundlage gebundenes Copolymerisat aus B2.1.1 und B2.1.2, welches sich dadurch auszeichnet, dass es in geeigneten Lösungsmittel (z.B. Aceton) gelöst werden kann.

Bevorzugt enthält die Komponente B2 freies Copolymerisat aus B2.1.1 und B2.1.2, welches ein gewichtsgemitteltes Molekulargewicht (Mw), bestimmt per Gelpermeationschromatographie mit Polystyrol als Standard, von bevorzugt 50000 bis 150000 g/mol, besonders bevorzugt von 70000 bis 130000 g/mol, besonders bevorzugt von 80000 bis 120000 g/mol aufweist.

## Komponente B3

Die Zusammensetzung kann als weitere Komponente B3 (Co) Polymerisate von mindestens einem Monomeren aus der Gruppe der Vinylaromaten, Vinylcyanide (ungesättigte Nitrile), (Meth) Acrylsäure- (C1 bis C8)- Alkylester, ungesättigte Carbonsäuren sowie Derivate (wie Anhydride und Imide) ungesättigter Carbonsäuren enthalten.

Insbesondere geeignet sind als Komponente B3 (Co) Polymerisate aus

B3.1 50 bis 99 Gew.- %, bevorzugt 65 bis 85 Gew.- %, besonders bevorzugt 70 bis 80 Gew.- % bezogen auf das (Co) Polymerisat B3 mindestens eines Monomeren ausgewählt aus der Gruppe der Vinylaromaten (wie beispielsweise Styrol, α- Methylstyrol), kernsubstituierten Vinylaromaten (wie beispielsweise p- Methylstyrol, p- Chlorstyrol) und (Meth) Acrylsäure- (C1- C8)- Alkylester (wie beispielsweise Methylmethacrylat, n- Butylacrylat, tert.- Butylacrylat) und

B3.2 1 bis 50 Gew.- %, bevorzugt 15 bis 35 Gew.- %, besonders bevorzugt 20 bis 30 Gew.- % bezogen auf das (Co) Polymerisat B3 mindestens eines Monomeren ausgewählt aus der Gruppe der Vinylcyanide (wie beispielsweise ungesättigte Nitrile wie Acrylnitril und Methacrylnitril), (Meth) Acrylsäure- (C1- C8)- Alkylester (wie beispielsweise Methylmethacrylat, n- Butylacrylat, tert.- Butylacrylat), ungesättigte Carbonsäuren und Derivate ungesättigter Carbonsäuren (beispielsweise Maleinsäureanhydrid und N- Phenyl- Maleinimid) .

Diese (Co)Polymerisate B3 sind harzartig, thermoplastisch und kautschukfrei. Besonders bevorzugt ist das Copolymerisat aus B3.1 Styrol und B3.2 Acrylnitril.

Derartige (Co)Polymerisate B3 sind bekannt und lassen sich durch radikalische Polymerisation, insbesondere durch Emulsions-, Suspensions-, Lösungs- oder Massepolymerisation herstellen.

Die (Co)Polymerisate B3 besitzen ein gewichtsgemitteltes Molekulargewicht (Mw), bestimmt per Gelpermeationschromatographie mit Polystyrol als Standard, von bevorzugt 50000 bis 150000 g/mol, besonders bevorzugt von 70000 bis 130000 g/mol, besonders bevorzugt von 80000 bis 120000 g/mol.

**Komponente C**

Die Zusammensetzung kann als Komponente C handelsübliche Polymeradditive enthalten.

Als handelsübliche Polymeradditive gemäß Komponente C kommen Additive wie beispielsweise Flammschutzmittel (beispielsweise Phosphor- oder Halogenverbindungen), Flammschutzsynergisten (beispielsweise nanoskalige Metalloxide), rauchhemmende Additive (beispielsweise Borsäure oder Borate), Antidrippingmittel (beispielsweise Verbindungen der Substanzklassen der fluorierten Polyolefine, der Silikone sowie Aramidfasern), interne und externe Gleit- und Entformungsmittel (beispielsweise Pentaerythrittetrastearat, Montanwachs oder Polyethylenwax), Fließfähigkeitshilfsmittel (beispielsweise niedermolekulare Vinyl (co) polymerisate), Antistatika (beispielsweise Blockcopolymere aus Ethylenoxid und Propylenoxid, andere Polyether oder Polyhydroxyether, Poletheramide, Polyesteramide oder Sulfonsäuresalze), Leitfähigkeitsadditive (beispielsweise Leitruß oder Carbon Nanotubes), Stabilisatoren (beispielsweise UV/ Licht- Stabilisatoren, Thermostabilisatoren, Antioxidantien, Umesterungsinhibitoren, Hydrolyseschutzmittel), antibakteriell **wirkende Additive** (beispielsweise Silber oder Silbersalze), kratzfestigkeitsverbessernde Additive (beispielsweise Silikonöle oder harte Füllstoffe wie Keramik (hohl) kugeln oder Quarzpulver), IR- Absorbentien, optische Aufheller, fluoreszierende Additive, Füll- und Verstärkungsstoffe (z.B. Talk, gemahlene Glas- oder Karbonfasern, Glas- oder Keramik (hohl) kugeln, Glimmer, Kaolin, $CaCO_3$ und Glasschuppen), Säuren sowie Farbstoffe und Pigmente (beispielsweise Ruß, Titandioxid oder Eisenoxid), oder aber Mischungen mehrerer der genannten Additive in Frage.

In bevorzugter Ausführungsform enthalten die erfindungsgemäßen Zusammensetzungen als Komponente C mindestens eine Komponente ausgewählt aus der Gruppe der Entformungsmittel, Stabilisatoren und Pigmente. In besonders bevorzugter Ausführungsform kommt als Entformungsmittel Pentaerythrittetrastearat zum Einsatz. In besonders bevorzugter Ausführungsform kommt als Stabilisator mindestens eine Verbindung ausgewählt aus der Gruppe der sterisch gehinderten Phenole, der organischen Phosphite und der Brönstedt-sauren Verbindungen zum Einsatz. In besonders bevorzugter Ausführungsform kommt als Pigment Ruß zum Einsatz.

Als Komponente C können die erfindungsgemäßen Zusammensetzungen insbesondere auch Flammschutzmittel, beispielsweise halogenierte organische Verbindungen bzw. phosphorhaltige Flammschutzmittel enthalten. Letztgenannte kommen bevorzugt zum Einsatz.

Phosphorhaltige Flammschutzmittel im erfindungsgemäßen Sinne sind bevorzugt ausgewählt aus den Gruppen der mono- und oligomeren Phosphor- und Phosphonsäureester, Phosphonatamine und Phosphazene, wobei auch Mischungen von mehreren Verbindungen ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte mono- und oligomere Phosphor- bzw. Phosphonsäureester sind Phosphorverbindungen der allgemeinen Formel (IV)

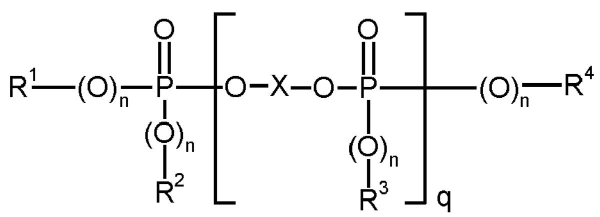

(IV)

worin

R1, R2, R3 und R4, unabhängig voneinander jeweils gegebenenfalls halogeniertes C1 bis C8-Alkyl, jeweils gegebenenfalls durch Alkyl, vorzugsweise C1 bis C4-Alkyl, und/oder Halogen, vorzugsweise Chlor, Brom, substituiertes C5 bis C6-Cycloalkyl, C6 bis C20-Aryl oder C7 bis C12-Aralkyl,

n unabhängig voneinander, 0 oder 1

q 0 bis 30 und

X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R1, R2, R3 und R4 unabhängig voneinander für C1 bis C4- Alkyl, Phenyl, Naphthyl oder Phenyl- C1- C4- alkyl. Die aromatischen Gruppen R1, R2, R3 und R4 können ihrerseits mit Halogen- und/ oder Alkylgruppen, vorzugsweise Chlor, Brom und/ oder C1 bis C4- Alkyl substituiert sein. Besonders bevorzugte Aryl- Reste sind Kresyl, Phenyl, Xylenyl, Propylphenyl oder Butylphenyl sowie die entsprechenden bromierten und chlorierten Derivate davon.

X in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (IV) kann, unabhängig voneinander, 0 oder 1 sein, vorzugsweise ist n gleich 1.

q steht für Werte von 0 bis 30. Bei Einsatz von Mischungen verschiedener Komponenten der Formel (IV) können Mischungen vorzugsweise zahlengemittelte q-Werte von 0,3 bis 10, besonders bevorzugt 0,5 bis 10, insbesondere 1,05 bis 1,4 verwendet werden.

X steht besonders bevorzugt für

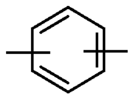 , 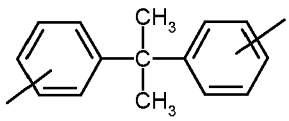 , 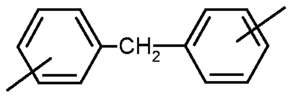 ,

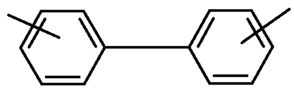

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Der Einsatz von oligomeren Phosphorsäureestern der Formel (IV), die sich vom Bisphenol A ableiten, ist besonders vorteilhaft, da die mit dieser Phosphorverbindung ausgerüsteten Zusammensetzungen eine besonders hohe Spannungsriss- und Hydrolysebeständigkeit sowie eine besonders geringe Neigung zur Belagsbildung bei der Spritzgussverarbeitung aufweisen. Des Weiteren lässt sich mit diesen Flammschutzmitteln eine besonders hohe Wärmeformbeständigkeit erzielen.

Als erfindungsgemäße Komponente C können Monophosphate (q=O), Oligophosphate (q=1-30) oder Mischungen aus Mono- und Oligophosphaten eingesetzt werden.

Monophosphorverbindungen der Formel (IV) sind insbesondere Tributylphosphat, Tris- (2- chlorethyl)- phosphat, Tris- (2, 3- dibromprobyl)- phosphat, Triphenylphosphat, Trikresylphosphat, Diphenylkresylphosphat, Diphenyloctylphosphat, Diphenyl- 2- ethylkresylphosphat, Tri- (isopropylphenyl)- phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Phosphorverbindungen gemäß Formel (IV) sind bekannt (vgl. z.B. EP-A 363 608, EP-A 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methode (Gaschromatographie (GC), High Pressure Liquid Chromatography (HPLC), Gelpermeationschromatographie (GPC)) die Zusammensetzung der

Phosphat-Mischung (Molekulargewichtsverteilung) bestimmt wird und daraus die Mittelwerte für q berechnet werden.

Phosphonatamine sind vorzugsweise Verbindungen der Formel (V)

A3- y- NB1y (V)

in welcher

A für einen Rest der Formel (Va)

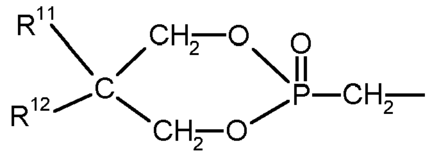

(Va)

oder (Vb)

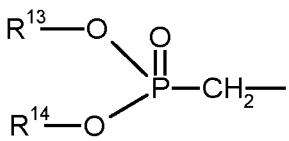

(Vb)

steht,

R11 und R12 unabhängig voneinander für unsubstituiertes oder substituiertes C1-C10-Alkyl oder für unsubstituiertes oder substituiertes C6 bis C10-Aryl, stehen,

R13 und R14 unabhängig voneinander für unsubstituiertes oder substituiertes C1 bis C10-Alkyl oder unsubstituiertes oder substituiertes C6 bis C10-Aryl stehen oder

R13 und R14 zusammen für unsubstituiertes oder substituiertes C3 bis C10-Alkylen stehen,

y die Zahlenwerte 0, 1 oder 2 bedeuten und

B1 unabhängig für Wasserstoff, gegebenenfalls halogeniertes C2 bis C8-Alkyl, unsubstituiertes oder substituiertes C6 bis C10-Aryl steht.

B1 steht vorzugsweise unabhängig für Wasserstoff, für Ethyl, n- oder iso-Propyl, welche durch Halogen substituiert sein können, unsubstituiertes oder durch C1 bis C4-Alkyl und/oder Halogen substituiertes C6 bis C10-Aryl, insbesondere Phenyl oder Naphthyl.

Alkyl in R11, R12, R13 und R14 steht unabhängig vorzugsweise für Methyl, Ethyl, n-Propyl, iso-Propyl, n-, iso-, sek. oder tert.-Butyl, Pentyl oder Hexyl.

Substituiertes Alkyl in R11, R12, R13 und R14 steht unabhängig vorzugsweise für durch Halogen substituiertes C1 bis C10-Alkyl, insbesondere für ein- oder zweifach substituiertes Methyl, Ethyl, n-Propyl, iso-Propyl, n-, iso-, sek. oder tert.-Butyl, Pentyl oder Hexyl.

C6 bis C10-Aryl steht in R11, R12, R13 und R14 unabhängig vorzugsweise für Phenyl, Naphthyl oder Binaphthyl, insbesondere o-Phenyl, o-Naphthyl, o-Binaphthyl, welche durch Halogen (im allgemeinen ein-, zwei- oder dreifach) substituiert sein können.

R13 und R14 können zusammen mit den Sauerstoffatomen, an die sie direkt gebunden sind, und dem Phosphoratom eine Ringstruktur bilden.

Beispielhaft und vorzugsweise werden genannt: 5, 5, 5', 5', 5'', 5''- Hexamethyltris (1, 3, 2- dioxaphosphorinanmethan) amino- 2, 2', 2''- trioxid der Formel (Va- 1)

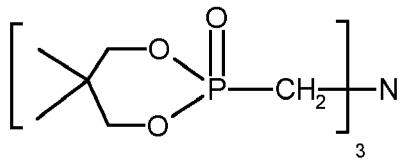

(Va-1)

1, 3, 2- Dioxaphosphorinan- 2- methanamin, N- butyl- N[(5, 5- dimethyl- 1, 3, 2- dioxaphosphorinan- 2- yl) methyl]- 5, 5- dimethyl-, P, 2- dioxide; 1, 3, 2- Dioxaphosphorinane- 2- methanamin, N- [[5,, 5- dimethyl- 1, 3, 2- dioxaphosphorinan- 2- yl) methyl]- 5, 5- dimethyl- N- phenyl-, P, 2- dioxid; 1, 3, 2- Dioxaphosphorinan- 2- methanamin, N, N-dibutyl- 5, 5- dimethyl-, 2- oxid, 1, 3, 2- Dioxaphosphorinan- 2- methanimin, N- [(5, 5- dimethyl- 1, 3, 2- dioxaphosphorinan-2- yl) methyl]- N- ethyl- 5, 5- dimethyl-, P, 2- dioxid, 1, 3, 2- Dioxaphosphorinan- 2- methanamin, N- butyl- N- [(5, 5-dichloromethyl- 1, 3, 2- dioxaphosphorinan- 2- yl)- methyl]- 5, 5- di- chloromethyl-, P, 2- dioxid, 1, 3, 2- Dioxaphosphorinan-2- methanamin, N- [(5, 5- di- chloromethyl- 1, 3, 2- dioxoaphosphorinan- 2- yl) methyl]- 5, 5- di- chloromethyl- N- phenyl-, P, 2- dioxid; 1, 3, 2- Dioxaphosphorinan- 2- methanamin, N, N- di- (4- chlorobutyl)- 5, 5- dimethyl- 2- oxide; 1, 3, 2-Dioxaphosphorinan- 2- methanimin, N- [(5, 5- dimethyl- 1, 3, 2- dioxaphosphorinan- 2- yl) methan]- N- (2- chloroethyl)-5, 5- di (chloromethyl) -, P2- dioxid.

Bevorzugt sind weiterhin:

Verbindungen der Formel (Va-2) oder (Va-3)

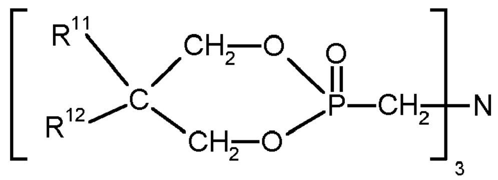

(Va-2)

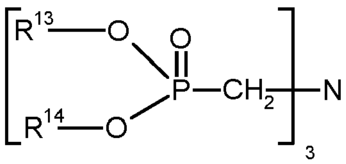

(Va-3)

wobei

R11, R12, R13 und R14 die oben angegebenen Bedeutungen haben.

Besonders bevorzugt sind Verbindungen der Formel (Va-2) und (Va-1). Die Herstellung der Phosphonatamine ist beispielsweise in US-PS 5 844 028 beschrieben.

Phosphazene sind Verbindungen der Formeln (VIa) und (VIb)

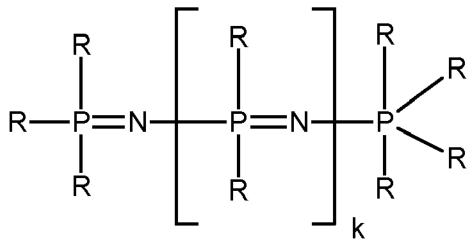

(VIa),

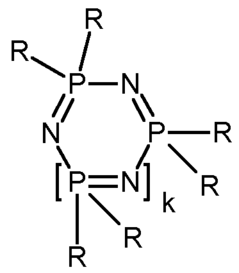

(VIb),

worin

R jeweils gleich oder verschieden ist und für Amino, jeweils gegebenenfalls halogeniertes, vorzugsweise mit Fluor halogeniertes C1 bis C8- Alkyl, oder C1 bis C8- Alkoxy, jeweils gegebenenfalls durch Alkyl, vorzugsweise C1 bis C4- Alkyl, und/ oder Halogen, vorzugsweise Chlor und/ oder Brom, substituiertes C5 bis C6- Cycloalkyl, C6 bis C20- Aryl, vorzugsweise Phenyl oder Naphthyl, C6 bis C20- Aryloxy, vorzugsweise Phenoxy, Naphthyloxy, oder C7 bis C12- Aralkyl, vorzugsweise Phenyl- C1- C4- alkyl, steht,

k für 0 oder eine Zahl von 1 bis 15, vorzugsweise für eine Zahl von 1 bis 10 steht.

Beispielhaft seien Propoxyphosphazen, Phenoxyphosphazen, Methylphenoxyphosphazen, Aminophosphazen und Fluoralkylphosphazene genannt. Bevorzugt ist Phenoxyphosphazen.

Die Phosphazene können allein oder als Mischung eingesetzt werden. Der Rest R kann immer gleich sein oder 2 oder mehre Reste in den Formeln (VIa) und (VIb) können verschieden sein. Phosphazene und deren Herstellung sind beispielsweise in EP-A 728 811, DE-A 1 961668 und WO 97/40092 beschrieben.

Die Flammschutzmittel können allein oder in beliebiger Mischung untereinander oder in Mischung mit anderen Flammschutzmitteln eingesetzt werden.

Darüber hinaus enthalten flammgeschützte Zusammensetzungen in bevorzugter Ausführungsform die zuvorgenannten Flammschutzmittel in Kombination mit mindestens einem Antidrippingmittel ausgewählt aus den Substanzklassen der fluorierten Polyolefine, der Silikone sowie Aramidfasern. Besonders bevorzugt kommen Polytetrafluorethylen-Polymere als Antidrippingmittel zum Einsatz.

## Herstellung der Formmassen und Formkörper

Die erfindungsgemäßen thermoplastischen Formmassen werden hergestellt, indem man die jeweiligen Bestandteile in bekannter Weise vermischt und bei Temperaturen von 200°C bis 340°C, bevorzugt von 240 bis 320°C, besonders bevorzugt von 260 bis 300°C in üblichen Aggregaten wie Innenknetern, Extrudern und Doppelwellenschnekken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

In einer bevorzugten Ausführungsform wird in einem ersten Schritt die Komponente B1 oder eine Teilmenge der Komponente B1 mit der Komponente B3 oder einer Teilmenge der Komponente B3 zunächst zu einem Präcompound umgesetzt und in einem zweiten Schritt die erfindungsgemäße Zusammensetzung unter Verwendung des so hergestellten Präcompounds produziert.

In einer besonders bevorzugten Ausführungsform wird im ersten Schritt das Pfropfpolymer B1 oder einer Teilmenge der Komponente B1 mit der Komponente B3 oder einer Teilmenge der Komponente B3 zu einem emissionsarmen Präcompound mittels Compoundierung unter **Vakuumentgasung hergestellt. Besonders vorteilhaft ist es, bei dieser** Entgasungscompoundierung die Komponente B1 in feuchtem Zustand (d.h. in Anwesenheit von Wasser) einzusetzen. Solche Verfahren werden beispielsweise in EP 0 768 157 A1 und EP 0 867 463 A1 beschrieben. Besonders geeignet sind Präcompounds, deren Gesamtgehalt flüchtiger organischer Verbindungen weniger als 1000 mg/kg, bevorzugt weniger als 800 mg/kg, insbesondere weniger als 500 mg/kg beträgt. Im zweiten Verfahrensschritt werden die übrigen Bestandteile und das Präcompound in bekannter Weise vermischt und bei den zuvorgenannten Temperaturen in üblichen Aggregaten wie Innenknetern, Extrudern und Doppelwellenschnecken schmelzcompoundiert oder schmelzextrudiert. In einer bevorzugten Ausführungsform wird bei diesem zweiten Compoundierungsschritt zwecks weiterer Entgasung flüchtiger Bestandteile (wie z.B. Restmonomere und Restlösungsmittel) ein Druck von <500 mbar, bevorzugt <400 mbar, insbesondere <200 mbar (absolut) angelegt.

Gegenstand der Erfindung ist daher auch ein Verfahren zur Herstellung emissionsarmer erfindungsgemäßer

Zusammensetzungen.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen, wärmeisolierte Transportbehältnisse, Formteile für Sanitär- und Badausrüstungen, Abdeckgitter für Lüfteröffnungen und Gehäuse für Gartengeräte. Die erfindungsgemäßen Zusammensetzungen eignen sich besonders auch zur kostengünstigen Herstellung solcher zuvor genannter Formkörper oder Formteile, welche ohne weitere Oberflächennachbehandlungsschritte in einem singulären Fertigungsschritt im Spritzgussverfahren hergestellt werden können und sowohl hochglänzende als auch tiefmatte Bauteilabschnitte aufweisen.

Unter "hochglänzend" verstanden wird im Sinne der vorliegenden Erfindung ein Glanzgrad ermittelt in Reflexion gemäß DIN 67530 bei einem Messwinkel von 60° von mindestens 98, bevorzugt von mindestens 99 bzw. bei einem Messwinkel von 20° von mindestens 95. Unter "tiefmatt" verstanden wird im Sinne der vorliegenden Erfindung ein Glanzgrad ermittelt in Reflexion gemäß DIN 67530 bei einem Messwinkel von 60° von maximal 2,5, bevorzugt maximal 2, besonders bevorzugt maximal 1,2.

Gegenstand der Erfindung sind somit auch Formkörper oder Formteile aus den **erfindungsgemäßen Zusammensetzungen, welche ohne weitere Oberflächennachbehandlungsschritte in einem singulären Fertigungsschritt im** Spritzgussverfahren hergestellt werden und sowohl hochglänzende als auch tiefmatte Bauteilabschnitte aufweisen.

## <u>Beispiele</u>

### Komponente A1

Lineares Polycarbonat auf Basis Bisphenol-A mit einem gewichtsgemittelten Molekulargewicht $M_w$ von 21 kg/mol (bestimmt durch GPC in Methylenchlorid bei 25°C mit Polycarbonat als Standard).

### Komponente A3

Lineares Polycarbonat auf Basis Bisphenol-A mit einem gewichtsgemittelten Molekulargewicht $M_w$ von 30 kg/mol (bestimmt durch GPC in Methylenchlorid bei 25°C mit Polycarbonat als Standard).

### Komponente A4

Lineares Polycarbonat auf Basis Bisphenol-A mit einem gewichtsgemittelten Molekulargewicht $M_w$ von 36 kg/mol (bestimmt durch GPC in Methylenchlorid bei 25°C mit Polycarbonat als Standard).

### Komponente B1-1

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 14:49:37 Gew.-%, in dem 6 Gew.-% der Pfropfpartikel einen Pfropfpartikeldurchmesser bestimmt durch Ultrazentrifugation von kleiner als 100 nm und 0 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Direktwachstumsverfahren hergestellt. Der Gelgehalt des Pfropfpolymerisats gemessen in Aceton liegt bei 80 Gew.-%.

### Komponente B1-2

Pfropfpolymerisat vom ABS-Typ hergestellt im Emulsionspolymersiationsverfahren unter Verwendung eines

Redox-Systems aus tert-Butylhydroperoxid und Natriumascorbat als Initiator der Pfropfungsreaktion mit einem A:B:S-Verhältnis von 12:58:30 Gew.-%, in dem 0 Gew.-% der Pfropfpartikel einen Pfropfpartikeldurchmesser bestimmt durch Ultrazentrifugation von kleiner als 100 nm und 0 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Direktwachstumsverfahren hergestellt. Der Gelgehalt des Pfropfpolymerisats gemessen in Aceton liegt bei 90 Gew.-%.

**Komponente B1-3**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 12:50:38 Gew.-%, in dem 40 Gew.-% der Pfropfpartikel einen Pfropfpartikeldurchmesser bestimmt durch Ultrazentrifugation von kleiner als 100 nm und 0 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Agglomerationsverfahren hergestellt. Der Gelgehalt des Pfropfpolymerisats gemessen in Aceton liegt bei 90 Gew.-%.

**Komponente B1-4**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 9:66:25 Gew.-%, in dem 40 Gew.-% der Pfropfpartikel einen Pfropfpartikeldurchmesser bestimmt durch Ultrazentrifugation von kleiner als 100 nm und 15 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Agglomerationsverfahren hergestellt. Der Gelgehalt des Pfropfpolymerisats gemessen in Aceton liegt bei 93 Gew.-%.

**Komponente B1-5**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 11:60:29 Gew.-%, in dem 10 Gew.-% der Pfropfpartikel einen Pfropfpartikeldurchmesser bestimmt durch Ultrazentrifugation von kleiner als 100 nm und 10 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Agglomerationsverfahren hergestellt. Der Gelgehalt des Pfropfpolymerisats gemessen in Aceton liegt bei 91 Gew.-%.

**Komponente B1-6**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 13:54:33 Gew.-%, in dem 0 Gew.-% der Pfropfpartikel einen Pfropfpartikeldurchmesser bestimmt durch Ultrazentrifugation von kleiner als 100 nm und 10 Gew.-% der Pfropfpartikel einen Pfropfpartikeldurchmesser bestimmt durch Ultrazentrifugation **von größer als 800 nm aufweisen. Die dem Pfropfpolymersiat zugrunde liegende** Pfropfgrundlage wurde im Agglomerationsverfahren hergestellt. Der Gelgehalt des Pfropfpolymerisats gemessen in Aceton liegt bei 80 Gew.-%.

**Komponente B1-7**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 14:43:43 Gew.-%, in dem 10 Gew.-% der Pfropfpartikel einen Pfropfpartikeldurchmesser bestimmt durch Ultrazentrifugation von kleiner als 100 nm und 5 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Agglomerationsverfahren hergestellt. Der Gelgehalt des Pfropfpolymerisats gemessen in Aceton liegt bei 66 Gew.-%.

**Komponente B1-8**

Pfropfpolymerisat vom MB-Typ hergestellt im Emulsionspolymersiationsverfahren mit Kaliumperoxodisulfat (KPS) als Initiator der radikalischen Pfropfungsreaktion mit einem Polybutadienkautschuk-Gehalt von 78 Gew.-% und mit einer PMMA-Pfropfhülle von 22 Gew.-%, in dem 0 Gew.-% der Pfropfpartikel einen Pfropfpartikeldurchmesser bestimmt durch Ultrazentrifugation von kleiner als 100 nm und 0 Gew.-% der Pfropfpartikel einen Pfropfpartikeldurchmesser

bestimmt durch Ultrazentrifugation von größer als 800 nm aufweisen. Die dem Pfropfpolymersiat zugrunde liegende Pfropfgrundlage wurde im Direktwachstumsverfahren hergestellt. Der Gelgehalt des Pfropfpolymerisats gemessen in Aceton liegt bei 94 Gew.-%.

**Komponente B1-9**

Pfropfpolymerisat vom ABS-Typ hergestellt im Emulsionspolymersiationsverfahren mit Kaliumperoxodisulfat (KPS) als Initiator der radikalischen Pfropfungsreaktion mit einem A:B:S-Verhältnis von 12:54:34 Gew.-%, in dem 10 Gew.-% der Pfropfpartikel einen Pfropfpartikeldurchmesser bestimmt durch Ultrazentrifugation von kleiner als 100 nm und 0 Gew.-% der Pfropfpartikel einen Pfropfpartikeldurchmesser bestimmt durch Ultrazentrifugation von größer als 800 nm aufweisen. Die dem Pfropfpolymersiat zugrunde liegende Pfropfgrundlage wurde im Direktwachstumsverfahren hergestellt. Der Gelgehalt des Pfropfpolymerisats gemessen in Aceton liegt bei 85 Gew.-%.

Die Charakteristika der Komponenten B1-1 bis B1-9 sind zur Übersicht in Tabelle 1 zusammengefasst.

***Tabelle 1:*** Charakteristika der Emulsionspfropfpolymerisate B1

| **E-Pfropfpolymerisat B1** | **Anteil < 100 nm [Gew. %]** | **Anteil > 800nm [Gew.-%]** | **Initiierung** | **Bd-Gehalt [Gew. %]** | **Gelgehalt [Gew.-%]** | **Kautschukgrundlage** |
|---|---|---|---|---|---|---|
| B1-1 | 6 | 0 | KPS | 49 | 80 | Direktwachstum |
| B1-2 | 0 | 0 | Redox | 58 | 90 | Direktwachstum |
| B1-3 | 40 | 0 | KPS | 50 | 90 | Agglomeration |
| B1-4 | 40 | 15 | KPS | 66 | 93 | Agglomeration |
| B1-5 | 10 | 10 | KPS | 60 | 91 | Agglomeration |
| B1-6 | 0 | 10 | KPS | 54 | 80 | Agglomeration |
| B1-7 | 10 | 5 | KPS | 43 | 66 | Agglomeration |
| B1-8 | 0 | 0 | KPS | 78 | 94 | Direktwachstum |
| B1-9 | 10 | 0 | KPS | 54 | 85 | Direktwachstum |

**Komponente B2-1**

n- Butylacrylat- modifiziertes **Pfropfpolymerisat vom ABS- Typ hergestellt im** Massepolymersiationsverfahren mit einem A: B: S- Verhältnis von 21: 10: 65 Gew.- % und mit einem n- Butylacrylatgehalt von 4 Gew.- %, in dem 0 Gew.- % der Pfropfpartikel einen Pfropfpartikeldurchmesser bestimmt durch Ultrazentrifugation von kleiner als 100 nm und 15 Gew.- % der Pfropfpartikel einen Pfropfpartikeldurchmesser bestimmt durch Ultrazentrifugation von größer als 800 nm aufweisen. Der D50- Wert der Pfropfpartikeldurchmesser bestimmt durch Ultrazentrifugation beträgt 0, 5 μm. Die dem Pfropfpolymersiat zugrunde liegende Pfropfgrundlage ist ein Styrol- Butadien- Blockcopolymer- Kautschuk (SBR) . Der Gelgehalt des Pfropfpolymerisats gemessen in Aceton liegt bei 20 Gew.- %. Das per GPC mit Polystyrol als Standard in Dimethylformamid bei 20°C gemessene gewichtsgemittelte Molekulargewicht $M_w$ des freien, d.h. nicht chemisch an den Kautschuk gebundenen bzw. in den Kautschukpartikeln in für Aceton unlöslicher Form inkludierten n-Butylacrylat- modifizierten SANs beträgt 110 kg/mol.

**Komponente B2-2**

Pfropfpolymerisat vom ABS-Typ hergestellt im Massepolymersiationsverfahren mit einem A:B:S-Verhältnis von 24:11:65 Gew.-%, in dem 0 Gew.-% der Pfropfpartikel einen Pfropfpartikeldurchmesser bestimmt durch Ultrazentrifugation von kleiner als 100 nm und 50 Gew.-% der Pfropfpartikel einen Pfropfpartikeldurchmesser bestimmt durch Ultrazentrifugation von größer als 800 nm aufweisen. Der D50-Wert der Pfropfpartikeldurchmesser bestimmt durch Ultrazentrifugation beträgt 0,8 μm. Die dem Pfropfpolymersiat zugrunde liegende Pfropfgrundlage ist ein reiner Polybutadien-Kautschuk. Der Gelgehalt des Pfropfpolymerisats gemessen in Aceton liegt bei 22 Gew.-%. Das per GPC mit Polystyrol als Standard in Dimethylformamid bei 20°C gemessene gewichtsgemittelte Molekulargewicht $M_w$ des freien, d.h. nicht chemisch an den Kautschuk gebundenen bzw. in den Kautschukpartikeln in für Aceton unlöslicher Form inkludierten SANs beträgt 150 kg/mol.

Die Charakteristika der Komponenten B2-1 und B2-2 sind zur Übersicht in Tabelle 2 zusammengefasst.

***Tabelle 2:*** Charakteristika der Emulsionspfropfpolymerisate B2

| M-Pfropfpolymerisat B2 | Anteil < 100 nm [Gew.-%] | Anteil > 800nm [Gew.-%] | D50 [μm] | Bd-Gehalt [Gew.-%] | Kautschuktyp | Gelgehalt [Gew.-%] | $M_w$(SAN) [kg/mol] |
|---|---|---|---|---|---|---|---|
| B2-1 | 0 | 15 | 0,5 | 10 | SBR | 20 | 110 |
| B2-2 | 0 | 50 | 0,8 | 11 | PBd | 22 | 150 |

**Komponente B3**

Styrol- Acrylnitril- Copolymerisat mit einem Styrol- Acrylnitril- Verhältnis von 76: 24 Gew.- % und mit einem per GPC mit Polystyrol als Standard in Dimethylformamid bei 20°C gemessenen gewichtsgemittelten Molekulargewicht $M_w$ von 100 kg/mol.

**Komponente C1**

Pentaerythrittetrastearat als Gleit-/Entformungsmittel

**Komponente C2**

Phosphorigsäureester des Bis-(2-hydroxy-3-cyclohexyl-5-methyl-phenyl)-methans mit der Formel

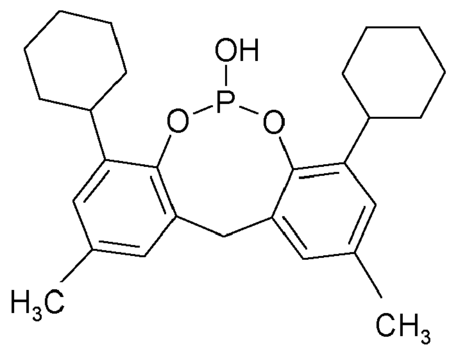

**Komponente C3**

Thermostabilisator, Irganox 1076, BASF (Ludwigshafen, Deutschland)

**Komponente C4**

Ruß-Pigment, Black Pearls 800, Cabot Corp. (Leuven, Belgien)

**Herstellung der Prüfkörper und Prüfung**

Das Mischen der Komponenten erfolgte auf einem Zweiwellenextruder ZSK25 der Fa. Coperion Werner & Pfleiderer bei einer Massetemperatur von 260°C und unter Anlegen eines Unterdrucks von 100 mbar (absolut).

Die aus der jeweiligen Compoundierung resultierenden Granulate wurden auf einer Spritzgussmaschine (Fa. Arburg) bei Schmelzetemperaturen von 260°C, 300°C bzw. 320°C und einer Werkzeugtemperatur von 80°C zu Probekörpern verarbeitet.

Der **Glanzgrad** wird an Plättchen der Abmessung 60 mm x 40 mm x 2 mm, welche bei einer Schmelzetemperatur von 260°C bzw. 320°C im Spritzguss unter Verwendung eines Werkzeuges mit hochglanzpolierter Oberfläche hergestellt

wurden, in Reflexion bei einem Messwinkel von 20° gemäß DIN 67530 gemessen.

Als Maß für die **Verarbeitungsstabilität des Glanzgrades** dient die relative Änderung der so gemessenen Glanzgrade bei einer Erhöhung der Schmelzetemperatur im Spritzguss von 260°C auf 320°C, welche berechnet wird gemäß:

Glanzgradänderung (260°C→320°C) = 100% ■(Glanzgrad bei 320°C - Glanzgrad bei 260°C)/Glanzgrad bei 260°C.

Die **Spannungrißbeständigkeit unter Medieneinfluss** (Environmental Stress Cracking = ESC) wird in Anlehnung an ISO 4599 an Prüfstäben der Abmessung 80 mm x 10 mm x 4 mm ermittelt, welche bei einer Schmelzetemperatur von 260°C im Spritzguss hergestellt wurden. Als Maß für die Spannungsrißbeständigkeit dient dabei die Zeit bis zum Bruchversagen der Prüfkörper, die mittels einer Spannschablone mit einer externen Randfaserdehnung von 2,4 % beaufschlagt und vollständig in Rapsöl als Medium eingetaucht wurden.

Als Maß für die **Tieftemperaturduktilität** im praxisrelevanten Schlag-/Crashversuch dient das Verhalten im multiaxialen Durchstoßversuch. Der Durchstoßversuch wird bei -30°C in Anlehnung an ISO 6603-2 an Prüfkörpern der Abmessung 60 mm x 60 mm x 2 mm durchgeführt, welche bei einer Schmelzetemperatur von 260°C und - zur Simulation verschärfter Verarbeitungsbedingungen - bei 300°C im Spritzguss hergestellt wurden. Dabei wurden die Bruchbilder von insgesamt zehn Prüfkörpern dahingehend beurteilt, ob ein splitterndes Bruchversagen auftrat, d.h. ob Teile des Prüfkörpers vollständig aus dem Prüfkörper herausbrachen oder ausgestanzt wurden.

Die **Wärmeformbeständigkeit** der Formmassen wird beurteilt anhand des Vicat B120-Wertes gemessen gemäß ISO 306 an Prüfstäben der Abmessung 80 mm x 10 mm x 4 mm, welche bei einer Schmelzetemperatur von 260°C im Spritzguss hergestellt wurden.

**Die Schmelzefluidität unter Spritzgussbedindungen wird beurteilt anhand der Schmelzeviskosität** gemessen in Anlehnung an ISO 11443 bei einer Temperatur von 260°C und bei einer Scherrate von $1000s^{-1}$.

Zum Nachweis, inwieweit sich die hergestellten Zusammensetzungen eignen zur Herstellung von Bauteilen mit sowohl hochglänzenden als auch hochmatten Bauteilabschnitten in einem singulären Spritzgussschritt, wurden im Spritzguss bei einer Schmelzetemperatur von 270°C und mit einer Werkzeugtemperatur von 80°C Platten gefertigt, welche auf der einen Seite hochglanzpoliert waren und auf der anderen Seite eine Daimler Benz Fein-Textur 35 (Dekor MBN 31030 000035) mit zusätzlicher Ätzung vom Typ Micromatt Stipple aufwiesen. Auf beiden Seiten wurde jeweils bei einem Messwinkel von 60° in Reflexion der Glanzgrad gemäß DIN 67530 **ermittelt. Ziel war es hier, auf der Hochglanzseite im Bauteil einen** Oberflächenglanzgrad von mindestens 99 und auf der Seite mit Oberflächentextur einen Oberflächenglanzgrad von max. 1.2 zu realisieren.

Die Beispiele und Vergleichsbeispiele sind den Tabellen 3 bis 8 zu entnehmen.

Die Beispiele in Tabelle 3 zeigen den Einfluss der Variation des Emulsionspfropfpolymerisats gemäß Komponente B1 bei vergleichbarem Gesamtkautschukgehalt und gleichem Masse-ABS-Typ und Masse-ABS-Gehalt der Polycarbonatzusammensetzung. Sie zeigen, dass diejenigen erfindungsgemäßen Beispiele 1 bis 6 mit einem Gehalt, **bezogen auf die** Gesamtzusammensetzung, an kautschukbasierten Pfropfteilchen aus den Komponenten B1 und B2 mit einem Pfropfpartikeldurchmesser gemessen per Ultrazentrifugation unterhalb von 100 nm bzw. oberhalb von 800 nm von jeweils in Summe unter 1,5 Gew.-%, wobei das Emulsionspfropfpolymersiat gemäß Komponente B1 mit Kaliumperoxodisulfat als Initiator der radikalischen Pfropfungsreaktion hergestellt wurde, das erfindungsgemäße Eigenschaftsprofil bestehend **aus über ein weites Intervall von Verarbeitungstemperaturen hinweg verarbeitungsstabilem Glanzgrad und Tieftemperaturduktilität und hoher** Spannungsrißbeständigkeit aufweisen und sich zur Herstellung von Bauteilen mit sowohl hochmatten als auch hochglänzenden Bauteilabschnitten in einem singulären Spritzgussschritt eignen. Das Vergleichsbeispiel V1, welches zwar die Bedingungen bezüglich der Pfropfpartikeldurchmesser erfüllt, in dem jedoch ein Emulsionspfropfpolymerisat gemäß Komponente B1 zum Einsatz kommt, welches unter Verwendung eines Redox-Systems aus tert-Butylhydroperoxid und Natriumascorbat als Initiator der Pfropfungsreaktion hergestellt wurde, erfüllt nicht die Anforderung eines über ein weites Intervall von Verarbeitungstemperaturen hinweg stabilen Glanzgrades. Das Vergleichsbeispiel V2, in welchem wiederum zwar ein Emulsionspfropfpolymerisat gemäß Komponente B1 zum Einsatz kommt, welches unter Verwendung von Kaliumperoxodisulfat als Initiator der radikalischen Pfropfungsreaktion hergestellt wurde, dessen Pfropfpartikel jedoch einen zu hohen Feinanteil aufweisen, zeigt ebenfalls keinen über ein weites Intervall von Verarbeitungstemperaturen hinweg stabilen Glanzgrad. Ähnlich verhält sich das Vergleichsbeispiel V3.

Tabelle 3: Beispiele - Variation Emulsionspfropfpolymerisat B1

| **Zusammensetzung** | **1** | **V1** | **V2** | **V3** | **2** | **3** | **4** | **5** | **6** |
|---|---|---|---|---|---|---|---|---|---|
| A3 | 59,35 | 59,35 | 59,35 | 59,35 | 59,35 | 59,35 | 59,35 | 59,35 | 59,35 |
| B1-1 | 13,25 | | | | | | | | |
| B1-2 | | 13,25 | | | | | | | |

(fortgesetzt)

| Zusammensetzung | 1 | V1 | V2 | V3 | 2 | 3 | 4 | 5 | 6 |
|---|---|---|---|---|---|---|---|---|---|
| B1-3 | | | 14,27 | | | | | | |
| B1-4 | | | | 11,24 | | | | | |
| B1-5 | | | | | 12,37 | | | | |
| B1-6 | | | | | | 13,74 | | | |
| B1-7 | | | | | | | 16,49 | | |
| B1-8 | | | | | | | | 9,51 | |
| B1-9 | | | | | | | | | 13,25 |
| B2-1 | 8,90 | 8,90 | 8,90 | 8,90 | 8,90 | 8,90 | 8,90 | 8,90 | 8,90 |
| B3 | 17,44 | 17,44 | 16,42 | 19,45 | 18,32 | 16,95 | 14,20 | 21,18 | 17,44 |
| C1 | 0,74 | 0,74 | 0,74 | 0,74 | 0,74 | 0,74 | 0,74 | 0,74 | 0,74 |
| C2 | 0,12 | 0,12 | 0,12 | 0,12 | 0,12 | 0,12 | 0,12 | 0,12 | 0,12 |
| C3 | 0,20 | 0,20 | 0,20 | 0,20 | 0,20 | 0,20 | 0,20 | 0,20 | 0,20 |
| C4 | 0,50 | 0,50 | 0,50 | 0,50 | 0,50 | 0,50 | 0,50 | 0,50 | 0,50 |
| PBd-Gehalt bezogen auf A-C [Gew -%] | 7,4 | 8,6 | 8,0 | 8,3 | 8,3 | 8,3 | 8,0 | 8,3 | 8,0 |
| Gehalt Pfropfpartikel >800 nm bezogen auf A-C [Gew -%] | 0,3 | 0,3 | 0,3 | 1,8 | 1,4 | 1,4 | 0,8 | 0,3 | 0,3 |
| Gehalt Pfropfpartikel <100 nm bezogen auf A-C [Gew -%] | 0,6 | 0,0 | 5,1 | 4,2 | 1,1 | 0,0 | 1,1 | 0,0 | 1,1 |
| Eigenschaften | | | | | | | | | |
| Glanzgrad FMPL @ 260°C (20°) | 97 | 94 | 84 | 96 | 98 | 97 | 95 | 100 | 97 |
| Glanzgrad FMPL @ 320°C (20°) | 97 | 76 | 45 | 90 | 95 | 97 | 98 | 100 | 99 |
| Glanzgradanderung FMPL 260 → 320°C (20°) | 0% | -19% | -46% | -6% | -3% | 0% | 3% | 0% | 2% |
| Glanzgrad polierte Oberflache @ 270°C (60°C) | 100 | 100 | 100 | 100 | 100 | 100 | 99 | 100 | 99 |
| Glanzgrad genarbte Oberflache @ 270°C (60°C) | 1,2 | 1,1 | 1,2 | 1,2 | 1,2 | 1,2 | 1,1 | 1,2 | 1,2 |
| Schmelzeviskositat (260°C/1000 s-1) [Pas] | 213 | 216 | 236 | 220 | 218 | 215 | 210 | 202 | 205 |
| ESC (Zeit bis Bruch) [h] | 10 | 16 | 14 | 10 | 23 | 29 | 31 | 4 | 14 |
| Durchstoßbewertung (-30°C/260°C) - splitterndes Bruchbild | nein | nein | nein | nein | nein | nein | nein | nein | nein |

(fortgesetzt)

| Eigenschaften | | | | | | | | | |
|---|---|---|---|---|---|---|---|---|---|
| Durchstoßbewertung (-30°C/300°C) - splitterndes Bruchbild | nein | nein | nein | nein | nein | nein | nein | nein | nein |
| Vicat B120 [°C] | 119 | 120 | 119 | 120 | 120 | 118 | 118 | 120 | 119 |

Die Beispiele in Tabelle 4 zeigen den Einfluss des Masse-Pfropfpolymerisats gemäß Komponente B2. Im Vergleichsbeispiel V4 kommt ein typisches Masse-ABS mit einem verglichen mit üblichen Emulsionspfropfpolymerisaten hohen Anteil grobteiliger Pfropfpartikel und somit auch hohem D50-Wert zum Einsatz, wie es auch im Stand der Technik offenbart ist. Das Vergleichsbeispiel zeigt im Vergleich zum entsprechenden erfindungsgemäßen Beispiel 6 einen vergleichsweise geringen Glanzgrad bei moderaten Verarbeitungstemperaturen sowie eine unerwünscht hohe Variabilität des Glanzgrades als Funktion der Verarbeitungstemperatur.

Tabelle 4: Beispiele - Variation Massepolymerisat B2

| **Zusammensetzung** | **6** | **V4** |
|---|---|---|
| A3 | 59,35 | 59,35 |
| B1-9 | 13,25 | 13,25 |
| B2-1 | 8,90 | |
| B2-2 | | 8,90 |
| B3 | 17,44 | 17,44 |
| C1 | 0,74 | 0,74 |
| C2 | 0,12 | 0,12 |
| C3 | 0,20 | 0,2 |
| C4 | 0,50 | 0,5 |
| PBd-Gehalt bezogen auf A-C [Gew.-%] | 8,0 | 8,1 |
| Gehalt Pfropfpartikel >800 nm bezogen auf A-C [Gew.-%] | 0,3 | 1,0 |
| Gehalt Pfropfpartikel <100 nm bezogen auf A-C [Gew.-%] | 1,1 | 1,1 |
| **Eigenschaften** | | |
| Glanzgrad FM PL @ 260°C (20°) | 97 | 90 |
| Glanzgrad FM PL @ 320°C (20°) | 99 | 99 |
| Glanzgradänderung FMPL 260 --> 320°C (20°) | 2% | 10% |
| Glanzgrad polierte Oberfläche @ 270°C (60°C) | 99 | 100 |
| Glanzgrad genarbte Oberfläche @ 270°C (60°C) | 1,2 | 1,1 |
| Schmelzeviskosität (260°C/1000 s-1) [Pas] | 205 | 221 |
| ESC (Zeit bis Bruch) [h] | 14 | 14 |
| Durchstoßbewertung (-30°C/260°C) - splitterndes Bruchbild | nein | nein |
| Durchstoßbewertung (-30°C/300°C) - splitterndes Bruchbild | nein | nein |
| Vicat B120 [°C] | 119 | 121 |

Die Beispiele in Tabelle 5 zeigen den Einfluss des Polycarbonat-Molekulargewichtes. Das Vergleichsbeispiel V5, welches unter Einsatz eines zu niedermolekularen Polycarbonat-Rohstoffs hergestellt wurde, zeigt bei Variation der Verarbeitungstemperatur eine unzureichende Glanzgradstabilität sowie eine mangelhafte Tieftemperaturduktilität bei erhöhten Verarbeitungstemperaturen. Darüber hinaus weist eine solche Zusammensetzung eine mangelhafte Spannungsrißbeständigkeit unter Chemikalieneinfluss auf. Das Vergleichsbeispiel V6 dagegen, welches unter Einsatz eines zu hochmolekularen Polycarbonat-Rohstoffs hergestellt wurde, zeigt einen insgesamt mangelhaften Glanzgrad auf polierten Werkzeugoberflächen.

Tabelle 5: Beispiele - Variation Polycarbonat-Molekulargewicht

| **Zusammensetzung** | **V5** | **7** | **V6** |
|---|---|---|---|
| A1 | 59,35 | | |
| A3 | | 59,35 | |
| A4 | | | 59,35 |
| B1-9 | 15,00 | 15,00 | 15,00 |
| B2-1 | 8,90 | 8,90 | 8,90 |
| B3 | 15,69 | 15,69 | 15,69 |
| C1 | 0,74 | 0,74 | 0,74 |
| C2 | 0,12 | 0,12 | 0,12 |
| C3 | 0,20 | 0,2 | 0,2 |
| C4 | 0,50 | 0,5 | 0,5 |
| PBd-Gehalt bezogen auf A-C [Gew.-%] | 9,0 | 9,0 | 9,0 |
| Gehalt Pfropfpartikel >800 nm bezogen auf A-C [Gew.-%] | 0,3 | 0,3 | 0,3 |
| Gehalt Pfropfpartikel <100 nm bezogen auf A-C [Gew.-%] | 1,3 | 1,3 | 1,3 |
| **Eigenschaften** | | | |
| Glanzgrad FMPL @ 260°C (20°) | 97 | 99 | 93 |
| Glanzgrad FMPL @ 320°C (20°) | 88 | 100 | 95 |
| Glanzgradänderung FMPL 260 --> 320°C (20°) | 9% | -1% | -2% |
| Glanzgrad polierte Oberfläche @ 270°C (60°C) | 100 | 100 | 99 |
| Glanzgrad genarbte Oberfläche @ 270°C (60°C) | 1,1 | 1,1 | 1,1 |
| Schmelzeviskosität (260°C/1000 s-1) [Pas] | 179 | 213 | 222 |
| ESC (Zeit bis Bruch) [h] | 1 | 15 | 27 |
| Durchstoßbewertung (-30°C/260°C) - splitterndes Bruchbild | nein | nein | nein |
| Durchstoßbewertung (-30°C/300°C) - splitterndes Bruchbild | ja | nein | nein |
| Vicat B120 [°C] | 121 | 119 | 118 |

Die Beispiele in Tabelle 6 zeigen den Einfluss des Verhältnisses von Emulsionspfropfpolymerisatmenge (B1) zu Massepfropfpolymerisatmenge (B2) bei konstanter Gesamtkautschukmenge. Alle erfindungsgemäßen Beispiele (6 und 8 bis 10), welche mit einer Kombination aus Emulsions- und Massepfropfpolymerisat hergestellt wurden, weisen im untersuchten Bereich, der sich von 12 bis 76 Gew.-%, bezogen auf die Summe aus B1 und B2, an Massepfropfpolymerisat B2 erstreckt, unabhängig vom Verhältnis dieser beiden Komponenten, das angestrebte Eigenschaftsprofil auf. Das Vergleichsbeispiel V9, welches auf reinem Emulsionspfropfpolymerisat basiert, d.h. kein Massepfropfpolymerisat B2 enthält, dagegen weist eine mangelhafte Spannungsrißbeständigkeit unter Chemikalieneinfluss auf.

Tabelle 6: Beispiele - Variation Emulsions-ABS/Masse-ABS-Verhältnis

| **Zusammensetzung** | **8** | **9** | **6** | **10** | **V9** |
|---|---|---|---|---|---|
| A3 | 59,35 | 59,35 | 59,35 | 59,35 | 59,35 |
| B1-9 | 9,46 | 11.66 | 13,25 | 14,48 | 14,84 |
| B2-1 | 30,13 | 17,80 | 8,90 | 2,00 | |

(fortgesetzt)

| Zusammensetzung | 8 | 9 | 6 | 10 | V9 |
|---|---|---|---|---|---|
| B3 | | 10,13 | 17,44 | 23,11 | 24,75 |
| C1 | 0,74 | 0,74 | 0,74 | 0,74 | 0,74 |
| C2 | 0,12 | 0,12 | 0,12 | 0,12 | 0,12 |
| C3 | 0,20 | 0,20 | 0,20 | 0,20 | 0,20 |
| C4 | 0,50 | 0,50 | 0,50 | 0,50 | 0,50 |
| PBd-Gehalt bezogen auf A-C [Gew.-%] | 8,1 | 8,1 | 8,0 | 8,0 | 8,0 |
| Gehalt Pfropfpartikel >800 nm bezogen auf A-C [Gew.-%] | 0,9 | 0,5 | 0.3 | 0,1 | 0 |
| Gehalt Pfropfpartikel <100 nm bezogen auf A-C [Gew.-%] | 0,8 | 1,0 | 1,1 | 1,2 | 1,3 |
| **Eigenschaften** | | | | | |
| Glanzgrad FMPL @ 260°C (20°) | 97 | 98 | 97 | 99 | 100 |
| Glanzgrad FMPL @ 320°C (20°) | 100 | 100 | 99 | 99 | 100 |
| Glanzgradänderung FMPL 260 → 320°C (20°) | 3% | 2% | 2% | 0% | 0% |
| Glanzgrad polierte Oberfläche @ 270°C (60°C) | 99 | 99 | 99 | 100 | 100 |
| Glanzgrad genarbte Oberfläche @ 270°C (60°C) | 1,0 | 1,0 | 1,2 | 1,1 | 1,1 |
| Schmelzeviskosität (260°C/1000 s-1) [Pas] | 193 | 199 | 205 | 205 | 270 |
| ESC (Zeit bis Bruch) [h] | 25 | 19 | 14 | 19 | 4 |
| Durchstoßbewertung (-30°C/260°C) - splitterndes Bruchbild | nein | nein | nein | nein | nein |
| Durchstoßbewertung (-30°C/300°C) - splitterndes Bruchbild | nein | nein | nein | nein | nein |
| Vicat B120 [°C] | 115 | 117 | 119 | 120 | 120 |

Die Beispiele in Tabelle 7 zeigen den Einfluss des Polycarbonat:ABS-Verhältnisses. Das Vergleichsbeispiel 7 mit zu niedrigem Polycarbonatgehalt führt zu einem mangelhaften Glanzgrad auf hochglanzpolierten Werkzeugoberflächen und zeigt eine mangelhafte Tieftemperaturduktilität bei erhöhten Verarbeitungstemperaturen und Spannungsrißbeständigkeit unter Chemikalieneinfluss. Das Vergleichsbeispiel 8 mit zu hohem Polycarbonatgehalt dagegen zeigt eine zu hohe Schmelzeviskosität und führt insofern auf genarbten Oberflächen zu einer mangelhaften Reproduktion der Werkzeugoberflächentextur und somit zu einem zu hohen Glanzgrad mit "speckig" wirkendem Oberflächen-Finish.

Tabelle 7: Beispiele - Variation PC:ABS-Verhältnis

| Zusammensetzung | 6 | V7 | V8 |
|---|---|---|---|
| A3 | 59,35 | 40,00 | 80,00 |
| B1-9 | 13,25 | 19,73 | 6,34 |
| B2-1 | 8,90 | 13,25 | 4,26 |
| B3 | 17,44 | 25,96 | 8,34 |
| C1 | 0,74 | 0,74 | 0,74 |
| C2 | 0,12 | 0,12 | 0,12 |
| C3 | 0,20 | 0,20 | 0,20 |
| C4 | 0,50 | 0,50 | 0,50 |
| PBd-Gehalt bezogen auf A-C [Gew.-%] | 8,0 | 12,0 | 3,9 |
| Gehalt Pfropfpartikel >800 nm bezogen auf A-C [Gew.-%] | 0,3 | 0,4 | 0,1 |
| Gehalt Pfropfpartikel <100 nm bezogen auf A-C [Gew.-%] | 1,1 | 1,7 | 0,5 |

(fortgesetzt)

| Eigenschaften | | | |
|---|---|---|---|
| Glanzgrad FMPL @ 260°C (20°) | 97 | 92 | 100 |
| Glanzgrad FMPL @ 320°C (20°) | 99 | 94 | 100 |
| Glanzgradänderung FMPL 260 --> 320°C (20°) | 2% | 2% | 0% |
| Glanzgrad polierte Oberfläche @ 270°C (60°C) | 99 | 98 | 100 |
| Glanzgrad genarbte Oberfläche @ 270°C (60°C) | 1,2 | 1,0 | 1,5 |
| Schmelzeviskosität (260°C/1000 s-1) [Pas] | 205 | 163 | 316 |
| ESC (Zeit bis Bruch) [h] | 14 | 8 | 22 |
| Durchstoßbewertung (-30°C/260°C) - splitterndes Bruchbild | nein | nein | nein |
| Durchstoßbewertung (-30°C/300°C) - splitterndes Bruchbild | nein | ja | nein |
| Vicat B120 [°C] | 119 | 108 | 138 |

Die Beispiele in Tabelle 8 zeigen den Einfluss des Kautschukgehaltes, welcher hier über eine Anhebung des Gehaltes an Emulsionspfropfpolymerisat gemäß Komponente B1 bei gleichbleibender Konzentration des Massepfropfpolymerisats gemäß Komponente B2, d.h. zu Lasten des kautschukfreien Vinylcopolymersiats gemäß Komponente B3 realisiert wurde. Das **Vergleichsbeispiel V10 mit zu geringem Kautschukgehalt weißt eine mangelhafte** Tieftemperaturduktilität und Spannungsrißbeständigkeit unter Chemikalieneinfluss auf. Das Vergleichsbeispiel V11 mit zu hohem Anteil an Pfropfpartikeln aus den Komponenten B1 und B2 mit einem Pfropfpartikeldurchmesser gemessen per Ultrazentrifugation von kleiner als 100 nm weißt eine mangelhafte Schmelzefluidität auf und zeigt bei mangelhaftem Glanzgrad bei **moderaten Verarbeitungstemperaturen auch eine zu hohe Abhängigkeit des auf** hochglanzpolierten Werkzeugoberflächen erzielten Glanzgrades **von der** Verarbeitungstemperatur.

Tabelle 8: Beispiele - Variation des Kautschukgehaltes

| Zusammensetzung | V10 | 11 | 6 | 12 | V11 |
|---|---|---|---|---|---|
| A3 | 59,35 | 59,35 | 59,35 | 59,35 | 59,35 |
| B1-9 | 3,00 | 9,00 | 13,25 | 15,00 | 26,69 |
| B2-1 | 8,90 | 8,90 | 8,90 | 8,90 | 8,90 |
| B3 | 27,69 | 21,69 | 17,44 | 15,69 | 4,00 |
| C1 | 0,74 | 0,74 | 0,74 | 0,74 | 0,74 |
| C2 | 0,12 | 0,12 | 0,12 | 0,12 | 0,12 |
| C3 | 0,20 | 0,20 | 0,20 | 0,20 | 0,20 |
| C4 | 0,50 | 0,50 | 0,50 | 0,50 | 0,50 |
| PBd-Gehalt bezogen auf A-C [Gew.-%] | 2,5 | 4,3 | 8,0 | 9,0 | 15,3 |
| Gehalt Pfropfpartikel >800 nm bezogen auf A-C [Gew.-%] | 0,3 | 0,3 | 0,3 | 0,3 | 0,3 |
| Gehalt Pfropfpartikel <100 nm bezogen auf A-C [Gew.-%] | 0.3 | 0,8 | 1.1 | 1.3 | 2.3 |
| **Eigenschaften** | | | | | |
| Glanzgrad FMPL @ 260°C (20°) | 100 | 99 | 97 | 99 | 94 |
| Glanzgrad FMPL @ 320°C (20°) | 98 | 100 | 99 | 100 | 99 |
| Glanzgradänderung FMPL 260 → 320°C (20°) | -2% | 1 % | 2% | 1 % | 5% |
| Glanzgrad polierte Oberfläche @ 270°C (60°C) | 100 | 100 | 99 | 100 | 99 |
| Glanzgrad genarbte Oberfläche @ 270°C (60°C) | 1.3 | 1.2 | 1.2 | 1.1 | 0,9 |

(fortgesetzt)

| Eigenschaften | | | | | |
|---|---|---|---|---|---|
| Schmelzeviskosität (260°C/1000 s-1) [Pas] | 168 | 191 | 205 | 213 | 296 |
| ESC (Zeit bis Bruch) [h] | 7 | 9 | 14 | 15 | 29 |
| Durchstoßbewertung (-30°C/260°C) - splitterndes Bruchbild | ja | nein | nein | nein | nein |
| Durchstoßbewertung (-30°C/300°C) - splitterndes Bruchbild | ja | nein | nein | nein | nein |
| Vicat B120 [°C] | 118 | 118 | 119 | 119 | 120 |

**Patentansprüche**

1. Polymerzusammensetzungen enthaltend

A) 45 bis 95 Gew.-Teile, bezogen auf die Summe aus A und B, wobei sich die Gewichtsteile aus A und B zu 100 addieren, aromatisches Polycarbonat und/oder Polyestercarbonat,
B) 5 bis 55 Gew.-Teile, bezogen auf die Summe aus A und B, einer Mischung enthaltend

B1) **mindestens ein im Emulsionspolymersiationsverfahren hergestelltes** Pfropfpolymerisat,
B2) mindestens ein im Masse-, Suspensions- oder Lösungspolymeriationsverfahren hergestelltes Pfropfpolymerisat,
B3) optional ein kautschukfreies Vinyl(co)polymerisat und

C) 0 bis 30 Gew.-Teile, bezogen auf die Summe auf A und B, mindestens eines handelsüblichen Polymeradditivs,

**dadurch gekennzeichnet, dass**

(i) die Zusammensetzung insgesamt weniger als 2,0 Gew.-% Pfropfpartikel aus den Komponenten B1 und B2 mit einem zugehörigen Pfropfpartikeldurchmesser über 800 nm enthält, und
insgesamt weniger als 2,0 Gew.-% an Pfropfpartikeln aus den Komponenten B1 und B2 mit einem zugehörigen Pfropfpartikeldurchmesser unterhalb von 100 nm enthält, und
(ii) das Pfropfpolymerisat gemäß Komponente B1 hergestellt wird durch Pfropfung einer Mischung (B1.1) vinylischer Verbindungen auf eine partikuläre kautschukelastische Pfropfgrundlage (B1.2), wobei diese Pfropfungsreaktion unter Verwendung einer anorganischen Persulfatverbindung als Polymerisationsinitiator gestartet wird, und
(iii) die Zusammensetzung frei ist von im Emulsiospolymerisationsverfahren hergestellten Pfropfpolymerisaten, die unter Verwendung von Redox-basierten Polymerisationsinitiatorsystemen hergestellt worden sind.

2. Zusammensetzung gemäß Anspruch 1, **dadurch gekennzeichnet, dass**

(i) die Zusammensetzung insgesamt weniger als 1,5 Gew.-% Pfropfpartikel aus den Komponenten B1 und B2 mit einem zugehörigen Pfropfpartikeldurchmesser über 800 nm enthält, und
insgesamt weniger als 1,5 Gew.-% an Pfropfpartikeln aus den Komponenten B1 und B2 mit einem zugehörigen Pfropfpartikeldurchmesser unterhalb von 100 nm enthält.

3. Zusammensetzung gemäß einem der vorhergehenden Ansprüche enthaltend 55 bis 75 Gew.-Teile, bezogen auf die Summe aus A und B, aromatisches Polycarbonat und/oder Polyestercarbonat.

4. Zusammensetzung gemäß einem der vorhergehenden Ansprüche enthaltend

A) 55 bis 75 Gew.-Teile, bezogen auf die Summe aus A und B, aromatisches Polycarbonat und/oder Polyestercarbonat,
B) 25 bis 45 Gew.-Teile, bezogen auf die Summe aus A und B, einer Mischung enthaltend
B1) mindestens ein im Emulsionspolymersiationsverfahren hergestelltes Pfropfpolymerisat,
B2) mindestens ein im Masse-, Suspensions- oder Lösungspolymeriationsverfahren hergestelltes Pfropfpolymerisat,
B3) optional ein kautschukfreies Vinyl(co)polymerisat und
C) 0,3 bis 7 Gew.-Teile, bezogen auf die Summe auf A und B, mindestens eines handelsüblichen Polymeradditivs.

**5.** Zusammensetzung gemäß einem der vorhergehenden Ansprüche, in der das aromatische Polycarbonat und/oder Polyestercarbonat gemäß Komponente A ein gewichtsgemitteltes Molekulargewicht $M_w$ gemessen per GPC in Methylenchlorid bei 25°C unter Verwendung von Polycarbonat-Standards von 26.000 bis 31.000 g/mol aufweist.

**6.** Zusammensetzung gemäß einem der vorhergehenden Ansprüche, in der das Pfropfpolymerisats B2 in einem Anteil von 10 bis 45 Gew.-Teilen, bezogen auf die Summe aus B1 und B2, vorliegt.

**7.** Zusammensetzung gemäß einem der vorhergehenden Ansprüche, in der die Pfropfpolymerisate B1 und B2 beide auf Butadien-haltigen elastomeren Pfropfgrundlagen B1.2 und B2.2 basieren und in der der Gesamtgehalt an Butadien aus den Pfropfgrundlagen B1.2 und B2.2, bezogen auf die Gesamtzusammensetzung, 5 bis 12 Gew.-% beträgt.

**8.** Zusammensetzung gemäß einem der vorhergehenden Ansprüche, **dadurch gekennzeichnet, dass** Komponente B1 ein im Emulsionspolymersiationsverfahren hergestelltes Pfropfpolymerisat ist von

B1.1) 20 bis 60 Gew.-%, bezogen auf die Komponente B1, einer Mischung aus
B1.1.1) 70 bis 80 Gew.- %, bezogen auf B1.1, mindestens eines Monomeren ausgewählt aus der Gruppe der Vinylaromaten, kernsubstituierten Vinylaromaten und (Meth) acrylsäure- (C1- C8)- Alkylester und
B1.1.2) 20 bis 30 Gew.- %, bezogen auf B1.1, mindestens eines Monomeren ausgewählt aus der Gruppe der Vinylcyanide, (Meth) Acrylsäure- (C1- C8)- Alkylester und Derivate ungesättigter Carbonsäuren,
auf
B1.2) 80 bis 40 Gew.-%, bezogen auf die Komponente B1, wenigstens einer elastomeren Pfropfgrundlage mit einer Glasübergangstemperatur <-60°C,
und dass Komponente B2 ein im Masse-, Lösungs-oder Suspensionspolymersiationsverfahren hergestelltes Pfropfpolymerisat ist von
B2.1) 87 bis 93 Gew.-%, bezogen auf die Komponente B2, einer Mischung aus
B2.1.1) 70 bis 80 Gew.- %, bezogen auf die Mischung B. 2.1, mindestens eines Monomeren ausgewählt aus der Gruppe der Vinylaromaten, kernsubstituierten Vinylaromaten und (Meth) acrylsäure- (C1- C8)- Alkylester und
B2.1.2) 20 bis 30 Gew.- % bezogen auf die Mischung B2.1, mindestens eines Monomeren ausgewählt aus der Gruppe der Vinylcyanide, (Meth) Acrylsäure- (C1- C8)- Alkylester und Derivate ungesättigter Carbonsäuren,
auf
B2.2) 13 bis 7 Gew.-%, bezogen auf die Komponente B2, wenigstens einer Pfropfgrundlage mit einer Glasübergangstemperatur < -60°C.

**9.** Zusammensetzung gemäß einem der vorhergehenden Ansprüche, in der die Pfropfpartikel in dem im Emulsionspolymerisationsverfahren hergestellten Pfropfpolymerisat B1 eine mittlere Teilchengröße (D50-Wert) von 0,2 bis 0,5 μm aufweisen.

**10.** Zusammensetzung gemäß einem der vorhergehenden Ansprüche, in der die Pfropfpartikel in dem im Masse-, Lösungs- oder Suspensionspolymerisationsverfahren hergestellten Pfropfpolymerisat B2 eine mittlere Teilchengröße (D50-Wert) von 0,3 bis 0,6 μm aufweisen.

**11.** Zusammensetzung gemäß einem der vorhergehenden Ansprüche, **dadurch gekennzeichnet, dass** das im Masse-, Lösungs- oder Suspensionspolymerisationsverfahren hergestellte Pfropfpolymerisat B2

- auf einem Styrol-Butadien-Blockcopolymerkautschuk oder einer Mischung von Styrol-Butadien-Blockcopolymerkautschuk mit reinem Polybutadienkautschuk als Pfropfgrundlage B2.2 basiert,
- einen Gelanteil von 17 bis 23 Gew.-%, gemessen in Aceton, aufweist, und
- freies Copolymerisat aus B2.1.1 und B2.1.2 enthält mit einem gewichtsgemittelten Molekulargewicht Mw, bestimmt in Tetrahydrofuran durch Gelpermeationschromatographie mit Polystyrol als Standard, von 80000 bis 120000 g/mol.

**12.** Zusammensetzung gemäß einem der vorhergehenden Ansprüche enthaltend als Komponente C mindestens ein

Polymeradditiv ausgewählt aus der Gruppe der Flammschutzmittel, Flammschutzsynergisten, rauchhemmenden Additive, Antidrippingmittel, internen und externen Gleit- und Entformungsmittel, Fließfähigkeitshilfsmittel, Antistatika, Leitfähigkeitsadditive, UV/Licht-Stabilisatoren, Thermostabilisatoren, Antioxidantien, Umesterungsinhibitoren, Hydrolyseschutzmittel, antibakteriell wirkenden Additive, kratzfestigkeitsverbessernden Additive, IR-Absorbentien, optischen Aufheller, fluoreszierenden Additive, Füll- und Verstärkungsstoffe, Säuren sowie Farbstoffe und Pigmente.

**13.** Zusammensetzung gemäß einem der vorhergehenden Ansprüche enthaltend als Komponente C mindestens ein phosphorhaltiges Flammschutzmittel ausgewählt aus der Gruppe der mono- und oligomeren Phosphor- und Phosphonsäureester, Phosphonatamine und Phosphazene.

**14.** Verwendung der Zusammensetzungen gemäß einem der vorhergehenden Ansprüche zur Herstellung **von Formkörpern oder Formteilen, welche ohne weitere** Oberflächennachbehandlungsschritte in **einem singulären Fertigungsschritt im** Spritzgussverfahren hergestellt werden und welche sowohl hochglänzende Bauteilabschnitte mit einem Glanzgrad ermittelt in Reflexion gemäß DIN 67530 bei einem Messwinkel von 60° von mindestens 98, als auch tiefmatte Bauteilabschnitte mit einem Glanzgrad ermittelt in Reflexion gemäß DIN 67530 bei einem Messwinkel von 60° von maximal 2 aufweisen.

**15.** Formkörper oder Formteile aus den Zusammensetzungen gemäß einem der Ansprüche 1 bis 13, welche ohne weitere Oberflächennachbehandlungsschritte in einem singulären Fertigungsschritt im Spritzgussverfahren hergestellt werden und welche sowohl hochglänzende Bauteilabschnitte mit einem Glanzgrad ermittelt in Reflexion gemäß DIN 67530 bei einem Messwinkel von 60° von mindestens 98, als auch tiefmatte Bauteilabschnitte mit einem Glanzgrad ermittelt in Reflexion gemäß DIN 67530 bei einem Messwinkel von 60° von maximal 2 aufweisen.

Europäisches Patentamt
European Patent Office
Office européen des brevets

## EUROPÄISCHER RECHERCHENBERICHT

Nummer der Anmeldung
EP 12 16 3441

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WO 00/56816 A1 (BAYER AG [US]) 28. September 2000 (2000-09-28) * Ansprüche 1,4-6 * * Beispiele * ----- | 1-15 | INV. C08L69/00 |
| A,D | DE 40 14 419 A1 (BAYER AG [DE]) 7. November 1991 (1991-11-07) * Ansprüche; Beispiele * ----- | 1-15 | |
| A | EP 0 429 957 A2 (BASF AG [DE]) 5. Juni 1991 (1991-06-05) * Ansprüche * ----- | 1-15 | |
| | | | RECHERCHIERTE SACHGEBIETE (IPC) |
| | | | C08L |

Der vorliegende Recherchenbericht wurde für alle Patentansprüche erstellt

1

| Recherchenort | Abschlußdatum der Recherche | Prüfer |
|---|---|---|
| Den Haag | 29. August 2012 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.........................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 12 16 3441

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2012

| Im Recherchenbericht angeführtes Patentdokument | Datum der Veröffentlichung | Mitglied(er) der Patentfamilie | Datum der Veröffentlichung |
|---|---|---|---|
| WO 0056816 A1 | 28-09-2000 | AR 023137 A1 | 04-09-2002 |
| | | AT 334171 T | 15-08-2006 |
| | | AU 4326100 A | 09-10-2000 |
| | | BR 0009208 A | 26-12-2001 |
| | | CA 2365270 A1 | 28-09-2000 |
| | | CN 1345355 A | 17-04-2002 |
| | | DE 60029587 T2 | 09-08-2007 |
| | | EP 1185585 A1 | 13-03-2002 |
| | | ES 2267523 T3 | 16-03-2007 |
| | | JP 4587568 B2 | 24-11-2010 |
| | | JP 2002540241 A | 26-11-2002 |
| | | MX PA01009576 A | 14-03-2002 |
| | | TW I230727 B | 11-04-2005 |
| | | WO 0056816 A1 | 28-09-2000 |
| DE 4014419 A1 | 07-11-1991 | DE 4014419 A1 | 07-11-1991 |
| | | EP 0456030 A2 | 13-11-1991 |
| EP 0429957 A2 | 05-06-1991 | DE 3939046 A1 | 29-05-1991 |
| | | EP 0429957 A2 | 05-06-1991 |
| | | US 5162423 A | 10-11-1992 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1141123 B1
- EP 488930 B1
- WO 9965991 A1
- US 4677162 A
- DE 4014419 A1
- EP 312929 A2
- EP 1960467 A1
- DE AS1495626 B
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- DE 2940024 A
- DE 3007934 A
- EP 363608 A
- EP 640655 A
- US PS5844028 A
- EP 728811 A
- DE 1961668 A
- WO 9740092 A
- EP 0768157 A1
- EP 0867463 A1


### In der Beschreibung aufgeführte Nicht-Patentliteratur


- **W. SCHOLTAN ; H. LANGE.** *Kolloid, Z. und Z. Polymere,* 1972, vol. 250, 782-1796
- Ullmanns Enzyklopädie der technischen Chemie. 1979, vol. 18, 301 ff
- **HOUBEN-WEYL.** Methoden der organischen Chemie. vol. 12/1, 43
- METHODEN DER ORGANISCHEN CHEMIE. vol. 6, 177